# EUROPÄISCHE PATENTANMELDUNG

(11) **EP 4 825 815 A1**
(43) Veröffentlichungstag der Anmeldung: **21.10.2026**
(21) Anmeldenummer: 25170558.8
(22) Anmeldetag: 15.04.2025
(51) Int. Cl.: C03C 3/064, C03C 3/068, C03C 3/14, C03C 3/15, C03C 4/20

(54) **MULTIKOMPONENTENGLAS, BAUTEIL AUS DEM MULTIKOMPONENTENGLAS UND VERWENDUNG DESSELBEN**

(71) Anmelder: Heraeus Quarzglas GmbH & Co. KG, 63450 Hanau (DE)
(72) Erfinder: Schenk, Christian, 63801 Kleinostheim (DE); Schulz, Gerd, 65812 Bad Soden (DE); König, Markus, 63801 Kleinostheim (DE); Bathon, Timo, 63801 Kleinostheim (DE)
(74) Vertreter: Heraeus IP

(57) **Zusammenfassung**

Beschrieben wird ein Multikomponentenglas, insbesondere zur Herstellung eines Glasbauteils, das für den Einsatz in einem plasmaunterstützten Trockenätzprozess konzipiert ist.

## Beschreibung

### Technischer Hintergrund

Die Erfindung betrifft ein Multikomponentenglas, insbesondere zur Herstellung eines Glasbauteils, das für den Einsatz in einem plasmaunterstützten Trockenätzprozess konzipiert ist.

Der plasmaunterstützte Trockenätzprozess ist eine Technologie, die beispielsweise zum Herstellen ultrafeiner Strukturen von Halbleiterbauelementen, hochauflösender Displays und zur Solarzellenfertigung dient. Dabei wird ein Substrat in einer Plasmakammer einem physikalisch-chemischen Ätzprozess unterzogen, der einen Ionenbeschuss und eine chemische Reaktion an der Substrat-Oberfläche umfasst. Beim reaktiven Ionenätzen - auch kurz als "RIE" (reactive ion etching) bezeichnet, werden in einem hochfrequenten Plasma aufgeladene, reaktive Ionen eingesetzt. Die aus dem Substrat herausgelösten flüchtigen Ätz- und Erosionsprodukte werden per Vakuum aus der Plasmakammer entfernt. Zum Ätzen von Strukturen auf Siliziumbasis werden üblicherweise halogenhaltige Ätzgase eingesetzt, wie beispielsweise CF₄, C₂F₆, C₃F₈, C₄F₆ CH₂F₂, C₄F₈, NF₃, SF₆, HF**,** HCl oder HBr.

### Stand der Technik

Beim Trockenätzprozess ist nicht nur das Substrat dem reaktiven Plasma ausgesetzt, sondern auch die Wandungen der Plasmakammer sowie deren Einbauten, und zwar insbesondere in der Nähe eines zu prozessierenden Substrats, wie beispielsweise einem Wafer. Die Reaktoreinbauten - wie etwa Waferhalter, Heizeinrichtungen, Pedestal, Stütz- oder Spannelemente, Ätzringe und Ringabdeckungen - bestehen häufig aus Quarzglas. Quarzglas zeichnet sich durch hohe Reinheit, U V-Transparenz, chemische Beständigkeit gegenüber vielen im Fertigungsprozess eingesetzten Substanzen sowie hohe Temperaturbeständigkeit aus. Allerdings erodiert Quarzglas im aggressiven Ätzprozess schnell und muss oft ausgetauscht werden, was zu Ausfallzeiten führt. Um die Maschinenverfügbarkeit zu verbessern und Ausfallzeiten zu reduzieren, wird permanent nach besseren, ätzresistenten Materialien gesucht. Neben Keramik oder mit Yttriumoxid (Y₂O₃) beschichteten Metallkammern wurden auch Mehrkomponentengläser entwickelt. Diese Gläser enthalten häufig SiO₂, Al₂O₃, MgO und Y₂O₃. Diese als Aluminosilikatgläser bezeichneten Gläser zeigen im Vergleich zu Quarzglas eine höhere Beständigkeit gegenüber Plasmaerosion. Beispielsweise wird in der US 2014/0274653 A1 für plasmabeständige Aluminosilikatgläser folgende chemische Zusammensetzung angegeben:

| | | | |
|---|---|---|---|
| Yttriumoxid (Y₂O₃): | 5 Gew.-% | bis | 40 Gew.-% |
| Aluminiumoxid (Al₂O₃) | 5 Gew.-% | bis | 30 Gew.-% |
| Siliziumdioxid (SiO₂): | 10 Gew.-% | bis | 80 Gew.-% |
| Magnesiumoxid (MgO) | 1 Gew.-% | bis | 20 Gew.-%. |

KR 2024/0116030 A offenbart ein plasmabeständiges Glas, welches Al₂O₃-frei ist und die folgenden Bestandteile umfasst 20-50 mol% BaO, 5-30 mol% B₂O₃, und 30-60 mol% SiO₂. Das Glas wird durch Mischen der Rohstoffe und Schmelzen bei 1250 bis 1850 °C an der Luft hergestellt und in eine (Graphit-)Form gegossen.

WO 2023/042717 A offenbart einen plasmabeständigen transparenten Glasblock für Halbleiterfertigungsanlagen, bestehend aus einer Deckplatte, einem Mikrowelleneinleitungsrohr, einem Hebestift, einer Düse, einem Randring, einem elektrostatischen Chuck, einer Duschplatte oder einer Schutzabdeckung für einen In-Kammer-Sensor. Die Zusammensetzung des Glasblocks besteht unter anderem aus den Glasbildner SiO₂, B₂O₃, P₂O₅, und GeO₂, die eine Menge von 10 bis 59,5 mol-% ausmachen. Der Gehalt an Erdalkalioxiden in dem Glasblock beträgt mehr als 20 mol-%.

US 2014/274653 A offenbart ein plasmaresistentes Glas bzw. eine plasmaresistente Glaskeramik für den Einsatz in Halbleiteranwendungen, wobei die Zusammensetzung wie folgt ist: SiO₂: 10-80 Gew-%, Y₂O₃: 4-40 Gew-%, Al₂O₃: 5-30 Gew-% und MgO: 1-20 Gew-%. Hergestellt wird das Material durch Mischen und Schmelzen der Ausgangspulver, danach Zerkleinern, Formgeben und Tempern bei niedrigerer Temperatur. Das Material kann als Showerhead, elektrostatischer Chuck oder Liner in Halbleiteranwendungen eingesetzt werden. DE 10 2005 034 785 B offenbart ein Glas für Mikrostrukturbauteile, bestehend aus Oxiden, die durch Reaktion mit Fluor bei niedrigen Temperaturen flüchtige Fluoride bilden, für Anwendungen des reaktiven Ionenätzens (RIE). Das Glasmaterial umfasst 40-70 mol-% SiO₂, 0-30 mol-% GeO₂, 5-20 mol-% B₂O₃, 5-20 mol-% P₂O₅, 0-10 mol-% WO₃, 0-10 mol% As₂O₃ und 0-5 mol-% Yb₂O₃. Die Gläser werden durch Schmelzen in Quarz-Tiegeln bei 1550 bis 1700 °C, Gießen in Platin-Tiegeln und Gießen in Metallformen hergestellt.

### Technische Aufgabe

Beim Einsatz der bekannten Glasmaterialien im RIE-Prozess wurde jedoch verstärkt Partikelbildung beobachtet. Partikel können abgelöste Teile von Schichten oder Reaktionsprodukte aus dem Ätzprozess sein, die sich während des Plasma-Ätzprozesses unter Verwendung von Ätzgasen unweigerlich auch auf den Substratoberflächen ablagern.

Der Erfindung zielt zunächst einmal darauf ab, die Partikelbildung aufgrund korrosiven Abtrags zu verringern oder zumindest in einem annehmbaren Bereich zu belassen. Insbesondere liegt die Aufgabe zugrunde, ein Multikomponentenglas bereitzustellen, das geeignet für die Herstellung eines Glasbauteils ist, welches sich bei der Verwendung in einem plasma-unterstützten Fertigungsprozess durch eine maximal annehmbare Menge an Partikelbildung auszeichnet.

Prozessgase in bestimmten RIE-Prozessen sind fast ausschließlich fluorhaltig. Ziel der erfindungsgemäßen Glasentwicklung ist daher auch die Entwicklung von Gläsern, die einen möglichst hohen Anteil an Oxiden aufweisen, deren Fluoride bei niedrigen Temperaturen verflüchtigen, so dass die Abdampfung von Korrosionsprodukten schneller erfolgt als die Bildung. Glasentwicklungen die vollständig aus solchen Oxiden bestehen, sind aber bisher aus dem Stand der Technik nicht bekannt. Deshalb ist es ein weiteres erfindungsgemäßes Ziel, Glaszusammensetzungen bereitzustellen, in denen der Anteil an Oxiden, deren Fluoride sich bei niedrigen Temperaturen verflüchtigen, möglichst hoch ist. Erfindungsgemäß besonders nachgefragt sind auch Multikomponentengläser, die bei chlor- und/oder bromhaltigen Ätzgasen Reaktionsprodukte bilden, die bei niedrigeren Temperaturen verflüchtigen. Die erfindungsgemäßen Multikomponentengläser sollten vorzugsweise aber auch Bestandteile umfassen, welche halogenidische Reaktionsprodukte mit dem Ätzgas bilden, die sich erst bei hohen Temperaturen verflüchtigen. Der Grund hierfür ist, dass diese Komponenten zur Glasbildung gebraucht werden.

Das erfindungsgemäße Ziel der Glasentwicklung ist ferner die Realisierung von Glaszusammensetzungen, deren Schmelzen bei Abkühlraten glasig und ohne merkliche Kristallisation erstarren, die bei normalen Formgebungsprozessen (gießen) üblich sind (10-100 K/s). Es hat sich gezeigt, dass die für diese Anwendung bevorzugten Komponenten der Glasentwicklung vor allem aus den Gruppen der sogenannten Netzwerkbildner und Zwischenoxide stammen. Umgekehrt stellen sich Oxide der sogenannten Netzwerkwandler als die heraus, welche Reaktionsprodukte mit den halogenidischen Ätzgasen bilden, die sich erst bei hohen Temperaturen verflüchtigen (> 1000 °C).

Zusammenfassend wird erfindungsgemäß ein Multikomponentenglas nachgesucht, welches ein Optimum von hoher Plasmaresistenz, also insbesondere eine geringe Ätzgeschwindigkeit und eine geringe Rauheit nach dem Ätzen, und eine geringe Partikelgenerierung in der Plasmakammer, insbesondere bei Messungen bei Realbedingen, aufweist.

### Allgemeine Beschreibung der Erfindung

Hinsichtlich des Multikomponentenglases wird diese Aufgabe gelöst durch ein Multikomponentenglas mit den Merkmalen von Anspruch 1.

Die Erfindung wird nachfolgend erläutert. Dabei wird ein Glasbauteil betrachtet, das eine Glasoberfläche aufweist, die während eines RIE-Trockenätzprozesses in einer evakuierbaren Prozesskammer einem halogenhaltigen Ätzgas bei einer Prozesstemperatur ausgesetzt ist und dabei einer ungewollten und unerwünschten Degradation unterliegt.

Es kann angenommen werden, dass während des RIE-Trockenätzprozesses mindestens zwei Mechanismen gleichzeitig auf der Glasoberfläche ablaufen. Der eine Mechanismus beruht auf Erosion, infolgedessen Material fortlaufend von der Glasoberfläche abgetragen wird. Der andere Mechanismus beruht auf Passivierung, bei der Halogenidreaktionsprodukte eine halogenidreiche Reaktionsproduktschicht auf der Glasoberfläche bilden, die einer weiteren Erosion entgegenwirkt. Diese Reaktionsproduktschicht könnte grundsätzlich geeignet sein, die weitere Halogenidbildung zu hemmen, wird aber anscheinend durch den Mechanismus der Erosion fortlaufend destabilisiert und beschädigt, was die Bildung von Partikeln im Prozess bei den bisher bekannten Multikomponentengläsern erklären könnte. Die Partikelbildung kann demnach darauf zurückgeführt werden, dass Reste der Reaktionsproduktschicht in Form halogenidischer Reaktionsprodukte oder von Agglomeraten davon auf der Glasoberfläche zurückbleiben, nicht vollständig durch die Absaugung entfernt werden und während des Trockenätzprozesses auf das zu prozessierende Halbleiterbauteil gelangen. Im Rahmen der vorliegenden Erfindung soll daher möglichst keine bzw. eine reduzierte Bildung einer Passivierungsschicht erreicht werden.

Der vorliegenden Erfindung liegt zunächst das Konzept zugrunde, die chemische Zusammensetzung des Multikomponentenglases so zu optimieren, dass es nicht zur Ausbildung einer erodierbaren Reaktionsproduktschicht kommt oder der Bildung agglomerierter Partikel kommt.

Um dies zu erreichen, wird erfindungsgemäß ein borhaltiges Multikomponentenglas mit geringer Partikelbildung beim Trockenätzen vorgeschlagen, das mindestens eine Komponente enthält, die mit halogenhaltigem Ätzgas ein volatiles Reaktionsprodukt bildet, und Alkali- und Erdalkalioxide nicht oder in einer Konzentration von jeweils maximal 15 mol-%, bevorzugt maximal 10 mol-%, weiter bevorzugt maximal 5 mol-%, enthält.

Erfindungsgemäß wurde herausgefunden, dass Multikomponentengläser, welche die vorgenannte Spezifikation erfüllen, zu einer geringen Partikelbildung, insbesondere in einem fluoridhaltigen Ätzgas, führen. Dieses wird insbesondere dem begrenzten Gehalt an Alkali- und Erdalkalioxide zugewiesen.

Dabei ist es insbesondere von Vorteil, wenn keine Erdalkalioxide oder Erdalkalioxide in einer Konzentration von jeweils maximal 15 mol-%, bevorzugt maximal 10 mol-%, weiter bevorzugt maximal 5 mol-%, in dem erfindungsgemäßen Multikomponentenglas vorliegen.

Im Rahmen der vorliegenden Erfindung werden unter Alkalioxiden, die nicht oder in einer Konzentration von jeweils maximal 15 mol-%, bevorzugt maximal 10 mol-%, weiter bevorzugt maximal 5 mol-%, in den erfindungsgemäßen Multikomponentengläsern enthalten sind, insbesondere Lithiumoxid, Natriumoxid und Kaliumoxid verstanden.

Dabei gilt in weiteren Ausgestaltungen insbesondere, dass das Multikomponentenglas Alkalimetalle oder Alkalimetalloxide nicht oder bevorzugt in einer Konzentration von jeweils weniger als 1000 mol-ppm enthält mit der Ausnahme oxidischer Verbindungen von Cäsium und/oder Rubidium.

In weiteren Ausgestaltungen der vorliegenden Erfindung beträgt der Gehalt an Alkalimetallen oder Alkalimetalloxiden in dem erfindungsgemäßen Multikomponentenglas maximal 900 mol-ppm, weiter bevorzugt maximal 800 mol-ppm, weiter bevorzugt maximal 700 mol-ppm, weiter bevorzugt maximal 600 mol-ppm, weiter bevorzugt maximal 500 mol-ppm, weiter bevorzugt maximal 400 mol-ppm, weiter bevorzugt maximal 300 mol-ppm, weiter bevorzugt maximal 200 mol-ppm, weiter bevorzugt maximal 100 mol-ppm.

Wenn im Rahmen der vorliegenden Erfindung davon ausgegangen wird, dass die Alkalimetalle oder Alkalimetalloxide nicht oder bevorzugt in einer Konzentration von jeweils weniger als 1000 mol-ppm mit der Ausnahme oxidischer Verbindungen von Cäsium und/oder Rubidium vorliegen, so gilt dieses zunächst einmal für jedes einzelne Alkalimetall oder jedes einzelne Alkalimetalloxid.

In einer bevorzugten Ausführungsform der vorliegenden Erfindung wird unter dem Merkmal, dass die Alkalimetalle oder Alkalimetalloxide nicht oder bevorzugt in einer Konzentration von jeweils weniger als 1000 mol-ppm mit der Ausnahme oxidischer Verbindungen von Cäsium und/oder Rubidium vorliegen, verstanden, dass sich der Gehalt im Glas auf die Summe aller Alkalimetalle oder Alkalimetalloxide (ausschließlich Cs und Rb) bezieht.

Diese beiden Möglichkeiten aus den vorstehenden zwei Absätzen gelten dann ebenfalls auch für bevorzugte Obergrenzen an Alkalimetallen und/oder Alkalimetalloxiden, die in der vorliegenden Erfindung definiert werden.

Im Rahmen der vorliegenden Erfindung werden unter Alkalimetallen oder Alkalimetalloxid-Verbindungen, die nicht oder bevorzugt in einer Konzentration von jeweils weniger als 1000 mol-ppm in der erfindungsgemäßen Glaszusammensetzungen enthalten sind, insbesondere Lithiumoxid, Natriumoxid und Kaliumoxid verstanden.

Ein weiterer Vorteil der vorliegenden Erfindung ist es, dass durch die Einschränkung der Gegenwart von Alkalimetallen oder Alkalimetall-Verbindungen es nicht zu störenden Freisetzungen der Alkalimetalle oder Alkalimetall-Verbindungen in Prozessen zur Herstellung von Halbleitermaterialien kommt, in welchen sich solche Bestandteile nachteilig auswirken würden.

Im Rahmen der vorliegenden Erfindung kann die Einschränkung der Gegenwart von Alkalimetallen oder Alkalimetall-Verbindungen durch die Verwendung von hochreinen Ausgangsmaterialien, insbesondere an SiO₂ und Al₂O₃, erreicht werden. Diese hochreinen Ausgangsmaterialien sind grundsätzlich verfügbar, werden aber bisher nicht für die Herstellung von Multikomponentengläser für Bauteile verwendet, die in plasmaunterstützten Trockenätzprozessen oder RIE-Prozessen Verwendung finden, benutzt. Kommerzielle Beispiele für geeignete Ausgangsmaterialien an Al₂O₃ sind Al₂O₃-Produkte von Nabalox, die je nach Typ 0,1 bis 0,3 Massen-% Na₂O (= 0,15 bis 0,5 mol-%Na₂O) enthalten.

Weitere Maßnahmen zur Einschränkung der Gegenwart von Alkalimetallen oder Alkalimetall-Verbindungen können darin liegen, die zu verwendenden Ausgangsmaterialien aufzureinigen und die Herstellung der Multikomponentengläser ausschließlich in Vorrichtungen durchzuführen, die keine Alkalimetalle oder Alkalimetall-Verbindungen freisetzen. Hierzu zählt beispielsweise die Auswahl eines geeigneten Tiegelmaterials bzw. einer geeigneten Schmelzanlage, bei welchen insbesondere auf Keramikmaterialien verzichtet wird oder bei welchen Platinmaterialien (z.B. Platintiegel) verwendet werden.

Um die erfindungsgemäße Aufgabenstellung zu lösen, wird ferner insbesondere eine borhaltige Glaszusammensetzung vorgeschlagen, in der bestimmte Glasbildner, ausgewählt aus der Gruppe, bestehend aus B₂O₃, SiO₂, WO₃ und Bi₂O₃ in einer Menge von 50 bis 100 mol-% enthalten sind. Borhaltige Gläser unterliegen in RIE-Trockenätzprozesses zwar einer gewissen Ätzrate, führen aber gleichzeitig auf überraschende Weise zu einer geringen Partikelbildung, was erfindungsgemäß bevorzugt ist.

Im Rahmen der vorliegenden Erfindung kann der Gehalt an Bor in den borhaltigen Multikomponentengläsern mindestens 1 mol-%, weiter bevorzugt mindestens 2 mol-%, weiter bevorzugt mindestens 3 mol-%, weiter bevorzugt mindestens 4 mol-%, weiter bevorzugt mindestens 5 mol-%, weiter bevorzugt mindestens 6 mol-%, weiter bevorzugt mindestens 7 mol-%, weiter bevorzugt mindestens 8 mol-%, weiter bevorzugt mindestens 9 mol-%, weiter bevorzugt mindestens 10 mol-%, weiter bevorzugt mindestens 11 mol-%, weiter bevorzugt mindestens 12 mol-%, weiter bevorzugt mindestens 13 mol-%, weiter bevorzugt mindestens 14 mol-%, weiter bevorzugt mindestens 15 mol-%, weiter bevorzugt mindestens 16 mol-%, weiter bevorzugt mindestens 17 mol-%, weiter bevorzugt mindestens 18 mol-%, weiter bevorzugt mindestens 19 mol-%, weiter bevorzugt mindestens 20 mol-%, betragen.

Im Rahmen der vorliegenden Erfindung kann der Gehalt an Bor in den borhaltigen Multikomponentengläsern höchstens 90 mol-%, weiter bevorzugt höchstens 90 mol-%, weiter bevorzugt höchstens 89 mol-%, weiter bevorzugt höchstens 88 mol-%, weiter bevorzugt höchstens 87 mol-%, weiter bevorzugt höchstens 86 mol-%, weiter bevorzugt höchstens 85 mol-%, weiter bevorzugt höchstens 84 mol-%, weiter bevorzugt höchstens 83 mol-%, weiter bevorzugt höchstens 82 mol-%, weiter bevorzugt höchstens 81 mol-%, weiter bevorzugt höchstens 80 mol-%, weiter bevorzugt höchstens 79 mol-%, weiter bevorzugt höchstens 78 mol-%, weiter bevorzugt höchstens 77 mol-%, weiter bevorzugt höchstens 76 mol-%, weiter bevorzugt höchstens 75 mol-%, weiter bevorzugt höchstens 74 mol-%, weiter bevorzugt höchstens 73 mol-%, weiter bevorzugt höchstens 72 mol-%, weiter bevorzugt höchstens 71 mol-%, weiter bevorzugt höchstens 70 mol-%, betragen.

Im Rahmen der vorliegenden Erfindung ist es bevorzugt, wenn der Gehalt an der Summe der Glasbildnern in dem Multikomponentenglas, ausgewählt aus der Gruppe, bestehend aus B₂O₃, SiO₂, WO₃ und Bi₂O₃, in einer Menge von mindestens 51 mol-%, weiter bevorzugt mindestens 52 mol-%, weiter bevorzugt mindestens 53 mol-%, weiter bevorzugt mindestens 54 mol-%, weiter bevorzugt mindestens 55 mol-%, weiter bevorzugt mindestens 55 mol-%, weiter bevorzugt mindestens 56 mol-%, weiter bevorzugt mindestens 57 mol-%, weiter bevorzugt mindestens 58 mol-%, weiter bevorzugt mindestens 59 mol-%, weiter bevorzugt mindestens 60 mol-%, weiter bevorzugt mindestens 61 mol-%, weiter bevorzugt mindestens 62 mol-%, weiter bevorzugt mindestens 63 mol-%, weiter bevorzugt mindestens 64 mol-%, weiter bevorzugt mindestens 65 mol-%, weiter bevorzugt mindestens 66 mol-%, weiter bevorzugt mindestens 67 mol-%, weiter bevorzugt mindestens 68 mol-%, weiter bevorzugt mindestens 69 mol-%, besonders bevorzugt mindestens 70 mol-%, enthalten ist.

Im Rahmen der vorliegenden Erfindung ist es bevorzugt, wenn der Gehalt an der Summe der Glasbildnern in dem Multikomponentenglas, ausgewählt aus der Gruppe, bestehend aus B₂O₃, SiO₂, WO₃ und Bi₂O₃, in einer Menge von höchstens 99 mol-%, weiter bevorzugt höchstens 98 mol-%, weiter bevorzugt höchstens 97 mol-%, weiter bevorzugt höchstens 96 mol-%, weiter bevorzugt höchstens 96 mol-%, weiter bevorzugt höchstens 95 mol-%, weiter bevorzugt höchstens 94 mol-%, weiter bevorzugt höchstens 93 mol-%, weiter bevorzugt höchstens 92 mol-%, weiter bevorzugt höchstens 93 mol-%, weiter bevorzugt höchstens 92 mol-%, weiter bevorzugt höchstens 91 mol-%, weiter bevorzugt höchstens 90 mol-%, weiter bevorzugt höchstens 89 mol-%, weiter bevorzugt höchstens 88 mol-%, weiter bevorzugt höchstens 87 mol-%, weiter bevorzugt höchstens 86 mol-%, weiter bevorzugt höchstens 85 mol-%, weiter bevorzugt höchstens 84 mol-%, weiter bevorzugt höchstens 83 mol-%, weiter bevorzugt höchstens 82 mol-%, weiter bevorzugt höchstens 81 mol-%, besonders bevorzugt höchstens 80 mol-%, enthalten ist.

Im Rahmen der vorliegenden Erfindung ist es bevorzugt, wenn der SiO₂-Gehalt als Bestandteil der Glasbildner in dem Multikomponentenglas maximal 40 mol-%, weiter bevorzugt maximal 38 mol-%, weiter bevorzugt maximal 36 mol-%, weiter bevorzugt maximal 34 mol-%, weiter bevorzugt maximal 32 mol-%, besonders bevorzugt maximal 30 mol-%, jeweils bezogen auf das Multikomponentenglas.

Das Multikomponentenglas enthält ferner eine weitere Komponente oder mehrere weitere Komponenten, die mit halogenhaltigem Ätzgas ein halogenidhaltiges, volatiles Reaktionsprodukt bilden. Die mindestens eine weitere Komponente ist eine Verbindung eines chemischen Elements, insbesondere ein Oxid oder ein Fluorid.

Das halogenidhaltige Reaktionsprodukt mindestens einer weiteren Komponente (neben SiO₂) enthält eine Fluor-, Chlor- und/oder Brom-Verbindung, die bei der Prozesstemperatur und dem Prozessdruck volatil ist, also in die Gasphase übergehen kann. Das Reaktionsprodukt wird dadurch von der Glasoberfläche und so aus der Prozesskammer kontinuierlich abgesaugt, was der Partikelbildung entgegenwirkt. Dies führt zu einer Verringerung der Partikelbildung im Trockenätzprozess.

Die Volatilität wird beispielsweise dadurch erreicht, wenn das volatile Reaktionsprodukt einen niedrigen Siedepunkt beziehungsweise einen niedrigen Sublimationspunkt hat. Als Anhaltspunkt für einen niedrigen Siedepunkt beziehungsweise Sublimationspunkt wird hier eine Verflüchtigungstemperatur unterhalb von 500°C definiert, bevorzugt eine Verflüchtigungstemperatur unterhalb von 300°C. Die "Verflüchtigungstemperatur" ist entweder die Temperatur am Siedepunkt beziehungsweise die Temperatur am Sublimationspunkt bei Standard-Druckbedingungen (atmosphärischer Druck = 101.325 Pa), je nach dem welchem Phasenübergang die spezifische Komponente unterliegt. Bei Komponenten mit einem Schmelzpunkt unterhalb des Siedepunktes beziehungsweise unterhalb des Sublimationspunktes, wird als "Verflüchtigungstemperatur" die Temperatur des Schmelzpunkts verstanden.

Bei dem erfindungsgemäßen Multikomponentenglas genügt es, wenn mindestens eine der üblicherweise Vielzahl der weiteren Komponenten eine Verflüchtigungstemperatur unterhalb von 500°C, bevorzugt eine Verflüchtigungstemperatur unterhalb von 300°C aufweist. Besonders bevorzugt weist aber mehr als eine der weiteren Komponenten des Multikomponentenglases eine Verflüchtigungstemperatur unterhalb von 500°C, bevorzugt eine Verflüchtigungstemperatur unterhalb von 300°C auf.

SiO₂ bildet mit den Halogenen Fluor, Chlor und Brom durchweg in diesem Sinne volatile Reaktionsprodukte, so dass bei einem Glasbauteil aus undotiertem Quarzglas grundsätzlich die Ausbildung einer Reaktionsproduktschicht vermieden wird. Glasbauteile aus undotiertem Quarzglas zeigen aber eine vergleichsweise geringe Trockenätzbeständigkeit. Es ist daher nicht befriedigend, allein die Bildung einer Reaktionsproduktschicht zu verhindern oder zu verringern, wenn nicht gleichzeitig beim Trockenätzprozess das Glasbauteil aus dem Multikomponentenglas eine höhere Trockenätzbeständigkeit hat als das Glasbauteil aus undotiertem Quarzglas. Daher ist zum einen der Anteil der SiO₂-Komponente im Multikomponentenglas auf maximal 40 mol-% beschränkt und zum anderen hat die mindestens eine weitere Komponente auch die Funktion, die Degradation des Multikomponentenglases beim Trockenätzprozess gegenüber der von undotiertem Quarzglas zu verringern.

Im Rahmen der vorliegenden Erfindung ist es daher auch weiter bevorzugt, wenn das Molverhältnis zwischen B₂O₃ und SiO₂, sofern SiO₂ in dem Multikomponentenglas enthalten ist, größer gleich 1 : 2, weiter bevorzugt größer gleich 1 : 1,75, weiter bevorzugt größer gleich 1 : 1,5, weiter bevorzugt größer gleich 1 : 1,25, besonders bevorzugt größer gleich 1 :1, ist.

Die oben beschriebene Funktion der Volatilität wird vorteilhafterweise dadurch erreicht, dass das volatile Reaktionsprodukt eine Verflüchtigungstemperatur oberhalb von 0°C, bevorzugt oberhalb von 60°C, und besonders bevorzugt oberhalb von 160°C aufweist.

Halogenidhaltige Reaktionsprodukte, deren Verflüchtigungstemperatur in diesem Temperaturbereich liegt, zeichnen sich durch eine im Vergleich zu Silizium-Halogeniden höhere thermische Stabilität aus. So liegen beispielsweise Verflüchtigungstemperaturen von 60°C und mehr sowohl oberhalb des Sublimationspunkts von SiF₄ (-95°C) als auch des Siedepunkts von SiCl₄ (57°C). Und Verflüchtigungstemperaturen von 160°C und mehr sind höher als der Siedepunkt von SiBr₄ (154°C). Komponenten des Multikomponentenglases, die derartige Reaktionsprodukte mit dem Ätzgas bilden, können dazu beitragen, die Degradation des Multikomponentenglases beim Trockenätzprozess gegenüber der von undotiertem Quarzglas zu verringern.

Bei einer besonders bevorzugten Ausführungsform des Multikomponentenglases ist das volatile Reaktionsprodukt ein Fluorid und weist eine Verflüchtigungstemperatur oberhalb von 0°C auf.

Das Multikomponentenglas ist in dem Fall insbesondere für den Einsatz mit einem fluorhaltigen Ätzgas ausgelegt, und nicht für den Einsatz mit einem chlor- oder bromhaltigen Ätzgas. Das liegt daran, dass das Multikomponentenglas mindestens eine Komponente enthält, deren volatiles fluoridisches Reaktionsprodukt eine niedrigere Verflüchtigungstemperatur aufweist als das chloridische und bromidische Reaktionsprodukt dieser Komponente. Beispielhafte und bevorzugte Komponenten dieser Art sind V₂O₅, MoO₃, WO₃ und GeO₂.

Bei einer anderen besonders bevorzugten Ausführungsform des Multikomponentenglases ist das volatile Reaktionsprodukt ein Chlorid oder ein Bromid weist eine Verflüchtigungstemperatur oberhalb von 70°C auf.

Das Multikomponentenglas ist in dem Fall insbesondere für den Einsatz mit einem chlor- oder bromhaltigen Ätzgas ausgelegt, und nicht für den Einsatz mit einem fluorhaltigen Ätzgas. Das liegt daran, dass das Multikomponentenglas mindestens eine Komponente enthält, deren volatiles chloridisches oder bromidisches Reaktionsprodukt eine niedrigere Verflüchtigungstemperatur aufweist als das fluoridisches Reaktionsprodukt dieser Komponente. Beispielhafte und bevorzugte Komponenten dieser Art sind Al₂O₃, Ga₂O₃, SnO₂, TiO₂, ZrO₂, HfO₂ und Bi₂O₃.

Es hat sich als vorteilhaft erwiesen, wenn die mindestens eine weitere Komponente
(a) zu mehr als 70%, bevorzugt zu mehr als 80% und besonders bevorzugt zu mehr als 90% eine dreiwertige oder vierwertige Verbindung eines kationisch vorliegenden chemischen Elements ist, und
(b) zu weniger als 30%, bevorzugt zu weniger als 20% und besonders bevorzugt im Bereich bis 10% eine einwertige oder zweiwertige Verbindung eines kationisch vorliegenden chemischen Elements ist.

Verbindungen drei- oder vierwertiger Elemente können in Glas eine Funktion als sogenannte "Netzwerkbildner" annehmen. Bekannte oxidische Netzwerkbildner sind SiO₂, B₂O₃, P₂O₅ und GeO₂. Diese Oxide können allein oder mit anderen Komponenten ein dreidimensionales, oxidisches, amorphes Glasnetzwerk bilden. Drei- oder vierwertige Elemente können bekanntermaßen die Netzwerkstruktur des Multikomponentenglases stabilisieren und werden deshalb für die Glasbildung benötigt. Ein drei- oder vierwertiges Element beziehungsweise mehrere drei- oder vierwertige Elemente bilden neben SiO₂ den Hauptbestandteil der Multikomponentengläser. Gleichzeitig bilden viele dieser Komponenten relativ leicht flüchtige Halogenidverbindungen, die der unerwünschten Partikelbildung entgegenwirken.

Ein- oder zweiwertige Elemente können hingegen das Glasnetzwerk auflockern und dadurch der Kristallisation und Entmischung während der Erstarrung aus der Schmelze entgegenwirken. Oxide aus einwertigen oder zweiwertigen Elementen beziehungsweise Oxide mehrerer ein- oder zweiwertiger Elemente können sich im Multikomponentenglas in geringer Konzentration daher insbesondere auf die Trockenätzbeständigkeit vorteilhaft auswirken. Andererseits sind halogenidhaltige Verbindungen dieser Elemente thermisch besonders stabil und sollten daher im RIE-Prozess möglichst gering gehalten werden, wenn es auf eine besonders niedrige Partikelbildung ankommt.

Bei einer besonders bevorzugten Zusammensetzung des Multikomponentenglases ist die mindestens eine weitere Komponente eine chemische Verbindung aus der Gruppe bestehend aus: Al₂O₃, ZnO, SnO₂, TiO₂, ZrO₂, HfO₂, MoO₃, V₂O₅, Nb₂O₅, Ta₂O₅, MgO, CaO, SrO, BaO, Y₂O₃ und den Oxiden der Lanthanoide.

Die Halogenide der Seltenerdmetalle haben im Allgemeinen eine hohe Verflüchtigungstemperatur, so dass der Seltenerdmetalloxid-Anteil insgesamt bevorzugt auf maximal 40mol%, bevorzugt maximal 15 mol-%, weiter bevorzugt maximal 10 mol-% und besonders bevorzugt maximal 5 mol-% beschränkt ist.

Die erfindungsgemäßen Glasbildner sind ausgewählt aus der Gruppe, bestehend aus B₂O₃, SiO₂, WO₃ und Bi₂O₃.

Entsprechende Mengen an B₂O₃ und SiO₂ sind bereits vorstehend beschrieben.

Die Mengen an WO₃ in dem erfindungsgemäßen Multikomponentengläser beträgt vorzugsweise mindestens 1 mol-%, weiter bevorzugt mindestens 2 mol-%, weiter bevorzugt mindestens 3 mol-%, weiter bevorzugt mindestens 4 mol-%, weiter bevorzugt mindestens 5 mol-%, weiter bevorzugt mindestens 6 mol-%, weiter bevorzugt mindestens 7 mol-%, weiter bevorzugt mindestens 8 mol-%, weiter bevorzugt mindestens 9 mol-%, weiter bevorzugt mindestens 10 mol-%.

Die Mengen an WO₃ in dem erfindungsgemäßen Multikomponentengläser beträgt vorzugsweise höchstens 70 mol-%, weiter bevorzugt höchstens 69 mol-%, weiter bevorzugt höchstens 68 mol-%, weiter bevorzugt höchstens 67 mol-%, weiter bevorzugt höchstens 66 mol-%, weiter bevorzugt höchstens 65 mol-%, weiter bevorzugt höchstens 64 mol-%, weiter bevorzugt höchstens 63 mol-%, weiter bevorzugt höchstens 62 mol-%, weiter bevorzugt höchstens 61 mol-%, weiter bevorzugt höchstens 60 mol-%.

Die Menge an WO₃ in dem erfindungsgemäßen Multikomponentengläser beträgt vorzugsweise 10 bis 60 mol-%.

Die Mengen an Bi₂O_{3 in} dem erfindungsgemäßen Multikomponentengläser beträgt vorzugsweise mindestens 1 mol-%, weiter bevorzugt mindestens 2 mol-%, weiter bevorzugt mindestens 3 mol-%, weiter bevorzugt mindestens 4 mol-%, weiter bevorzugt mindestens 5 mol-%, weiter bevorzugt mindestens 6 mol-%, weiter bevorzugt mindestens 7 mol-%, weiter bevorzugt mindestens 8 mol-%, weiter bevorzugt mindestens 9 mol-%, weiter bevorzugt mindestens 10 mol-%.

Die Mengen an Bi₂O_{3 in} dem erfindungsgemäßen Multikomponentengläser beträgt vorzugsweise höchstens 70 mol-%, weiter bevorzugt höchstens 69 mol-%, weiter bevorzugt höchstens 68 mol-%, weiter bevorzugt höchstens 67 mol-%, weiter bevorzugt höchstens 66 mol-%, weiter bevorzugt höchstens 65 mol-%, weiter bevorzugt höchstens 64 mol-%, weiter bevorzugt höchstens 63 mol-%, weiter bevorzugt höchstens 62 moₗ-%, weiter bevorzugt höchstens 61 mol-%, weiter bevorzugt höchstens 60 mol-%.

Die Menge an Bi₂O₃ in dem erfindungsgemäßen Multikomponentengläser beträgt vorzugsweise 10 bis 60 mol-%.

Alkali- und Erdalkalioxide wirken im Multikomponentenglas in der Regel als sogenannte "Netzwerkwandler" und werden auch als "Trennstellenbildner" bezeichnet. Sie unterbrechen die Netzwerkstruktur des Glases und verringern dessen Viskosität. Im Hinblick darauf enthält das Multikomponentenglas Alkali- und Erdalkalioxide mit einem Anteil von maximal 15 mol-%, bevorzugt maximal 10 mol-% und besonders bevorzugt maximal 5 mol-%

Phosphoroxid kommt für das oben erörterte Konzept der Erfindung grundsätzlich als Komponente des Multikomponentenglases in Betracht. Allerdings wird Phosphor als Dotierstoffe in Halbleiterwerkstoffen eingesetzt, so dass gegebenenfalls der Eintrag und phosphorhaltiger Verunreinigungen bei der Halbleiterfertigung möglichst auszuschließen sind. Im Hinblick darauf wird eine Ausführungsform des Multikomponentenglases bevorzugt, das Phosphorverbindungen nicht oder in einer Konzentration von jeweils weniger als 1000 Gew.-ppm enthält.

Auch Verbindungen von Antimon, Arsen und Gallium wären grundsätzlich als Komponenten des Multikomponentenglases geeignet. Allerdings kommen auch diese Substanzen als Dotanten in Halbleiterwerkstoffen vor. Im Hinblick darauf wird ein Multikomponentenglas bevorzugt, das Verbindungen von Antimon, Arsen, Gallium nicht oder als Verunreinigung in einer Konzentration von maximal 1000 Gew.-ppm enthält.

Wegen der niedrigen Siedepunkte von AlCl₃ (Siedepunkt: 180°C) und AlBr₃ (Siedepunkt: 263°C) wäre Al₂O₃ grundsätzlich eine geeignete Komponente für das Multikomponentenglas. Es hat sich aber gezeigt, dass Al₂O₃-haltiges Multikomponentenglas häufig zu Partikelbildung neigt, was darauf zurückgeführt werden kann, dass viele Ätzgase Fluor enthalten und das daraus resultierende Reaktionsprodukt AlF₃ einen hohen Sublimationspunkt von 1260°C hat.

Eine weitere bevorzugte Ausführungsform des Multikomponentenglases enthält daher Aluminiumverbindungen nicht oder als Komponente in einer Konzentration von weniger als 1000 mol-ppm.

Eine weitere bevorzugte Ausführungsform des Multikomponentenglases enthält Gold, Silber und Kupfer (oder deren Verbindungen) jeweils in einer Konzentration von jeweils weniger als 100 Gew.-ppm. Der Grund hierfür ist die hohe Diffusivität der genannten Elemente im Glasnetzwerk.

Eine weitere bevorzugte Ausführungsform des Multikomponentenglases zeichnet sich dadurch aus, dass es frei ist von Blei-, Cadmium- und Thalliumverbindungen, die toxisch sind (jeweils weniger als 100 Gew.-ppm).

Das Multikomponentenglas ist im einfachsten und bevorzugten Fall ein rein oxidisches Glas, bei dem alle Anionen aus Sauerstoff-Ionen (O²⁻) bestehen. Die Sauerstoff-Ionen besetzen gegebenenfalls 100% der Anionenplätze der Netzwerkstruktur des Glases.

Bei einer anderen, gleichermaßen bevorzugten Ausführungsform ist ein Teil der Sauerstoff-Ionen durch Fluor-Ionen substituiert. In diesem Fall weist das Multikomponentenglas eine Netzwerkstruktur mit Anionenplätzen auf, wobei (100-x)% der Anionenplätze durch Sauerstoff-Ionen (O²⁻) und der Anteil x(%) durch Fluor-Ionen (F⁻) besetzt ist, wobei x der Substitutionsgrad (in %) ist und im Bereich zwischen 0,1 und 10, bevorzugt im Bereich von 0,1 bis 5 und besonders bevorzugt im Bereich von 0,1 bis 4 liegt. Die Anzahl der substituierenden FluoridIonen ist doppelt so groß wie der der substituierten Sauerstoff-Ionen (O²⁻).

Die teilweise Substitution von Sauerstoff-Ionen durch Fluor-Ionen kann zu einer höheren Trockenätzbeständigkeit gegenüber Halogenen beitragen. Bei einem Fluor-Substitutionsgrad von weniger als 0,1% ist dieser Effekt nicht nennenswert ausgeprägt, und Fluor- Substitutionsgrad von mehr als 10% bewirken keine Verbesserung hinsichtlich der Trockenätzbeständigkeit mehr. Bevorzugt wird daher eine Obergrenze für den Fluor-Substitutionsgrad von 5%, noch besser eine Obergrenze von 4%.

Die Erfahrung zeigt, dass höherschmelzende Multikomponentengläser stabilere Glasnetzwerke aufweisen als niedrigschmelzende Gläser, was sich in der Regel makroskopisch positiv auf Eigenschaften wie die mechanische Härte und Festigkeit und chemische Beständigkeit auswirkt. Als Maß für die Temperaturstabilität von Multikomponentengläsern wird generell die sogenannte Glasübergangstemperatur T_{g} (auch: Transformationstemperatur) herangezogen, dem eine Viskosität von 10^{13,2} dPa·s zugeschrieben wird. Beim erfindungsgemäßen Multikomponentenglas hat es sich als günstig erwiesen, wenn die Glasübergangstemperatur T_{g} vergleichsweise hoch ist und über 600°C, besonders bevorzugt oberhalb von 700°C liegt.

Bei der Herstellung technischer Gläser werden üblicherweise Läutermittel zugesetzt, deren Funktion darin besteht, durch Freisetzung großer Blasen bzw. durch Gasresorption die Blasigkeit in der Glasschmelze zu reduzieren. Dies sind üblicherweise zusammensetzungsfremde Stoffe wie Arsen- oder Antimontrioxid in Konzentrationen der Größenordnung 0,1 Gew.-%. Dies ist für die Herstellung hochreiner Multikomponentengläserproblematisch, weshalb das Austreiben von Blasen nur physikalisch, beispielsweise durch Blasenwachstum und -aufstieg erfolgen sollte. Dafür ist es von Vorteil, eine geringe Viskosität im Schmelzprozess einstellen zu können. Diese Viskosität liegt bevorzugt im Bereich von 10¹ dPa·s bis 10⁴ dPa·s, typischerweise um 10² dPa·s. Im Fall der Verwendung von Platin als Tiegelmaterial sollte die Temperatur für letztere Viskosität 1600°C, bevorzugt 1500°C nicht überschreiten.

Das Multikomponentenglas hat vorzugsweise folgende Zusammensetzung:

| **Komponente** | **Konzentrationsbereich von - bis ( mol-%)** | |
|---|---|---|
| B₂O₃ | 10 | 70 |
| SiO₂ | 5 | 40 |
| Bi₂O₃ | 10 | 60 |
| WO₃ | 10 | 60 |
| Al₂O₃ | 0 | 35 |
| ZnO | 0 | 40 |
| Al₂O₃+ZnO | 0 | 60 |
| SnO₂ | 0 | 15 |
| TiO₂ | 0 | 35 |
| ZrO₂ | 0 | 15 |
| WO₃ | 0 | 20 |
| MoO3 | 0 | 20 |
| Nb₂O₅ | 0 | 50 |
| Ta₂O₅ | 0 | 30 |
| Nb₂O₅ + Ta₂O₅ | 0 | 60 |
| MgO | 0 | 60 |
| CaO | 0 | 60 |
| SrO | 0 | 60 |
| BaO | 0 | 60 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 15 |
| GeO₂ | 0 | 10 |

Das Multikomponentenglas hat vorzugsweise folgende Zusammensetzung:

| **Komponente** | **Konzentrationsbereich von - bis ( mol-%)** | |
|---|---|---|
| B₂O₃ | 10 | 70 |
| SiO₂ | > 0 | 40 |
| Bi₂O₃ | 0 | 50 |
| SiO₂+Bi₂O₃ | 30 | 100 |
| Al₂O₃ | 0 | 35 |
| ZnO | 0 | 40 |
| Al₂O₃+ZnO | 0 | 60 |
| SnO₂ | 0 | 15 |
| TiO₂ | 0 | 35 |
| ZrO₂ | 0 | 15 |
| WO₃ | 0 | 20 |
| MoO3 | 0 | 20 |
| Nb₂O₅ | 0 | 50 |
| Ta₂O₅ | 0 | 30 |
| Nb₂O₅ + Ta₂O₅ | 0 | 60 |
| MgO | 0 | 15 |
| CaO | 0 | 15 |
| SrO | 0 | 15 |
| BaO | 0 | 15 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 15 |
| GeO₂ | 0 | 10 |
| Summe der Glasbildner, ausgewählt aus der Gruppe, bestehend aus B₂O₃, SiO₂, WO₃, Bi₂O₃ und Mischungen davon | 70 | 100 |

Bei einer besonders bevorzugten Ausführungsform kann das Multikomponentenglas als sogenanntes "Aluminosilikatglas" klassifiziert werden. In diesem Fall hat das Multikomponentenglas vorzugsweise folgende Zusammensetzung:

| **Komponente** | **Konzentrationsbereich von - bis ( mol-%)** | |
|---|---|---|
| B₂O₃ | 10 | 70 |
| SiO₂ | > 0 | 40 |
| Bi₂O₃ | 0 | 10 |
| SiO₂+Bi₂O₃ | 25 | 70 |
| Al₂O₃ | 5 | 25 |
| ZnO | 0 | 30 |
| Al₂O₃+ZnO | 5 | 50 |
| SnO₂ | 0 | 10 |
| TiO₂ | 0 | 20 |
| ZrO₂ | 0 | 10 |
| WO₃ | 0 | 10 |
| MoO3 | 0 | 10 |
| Nb₂O₅ | 0 | 10 |
| Ta₂O₅ | 0 | 10 |
| Nb₂O₅ + Ta₂O₅ | 0 | 15 |
| MgO | 0 | 15 |
| CaO | 0 | 15 |
| SrO | 0 | 15 |
| BaO | 0 | 15 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 10 |
| GeO₂ | 0 | 10 |

Bei einer anderen bevorzugten Ausführungsform kann das Multikomponentenglas als sogenanntes "Bismutsilikatglas" klassifiziert werden. In diesem Fall hat das Multikomponentenglas vorzugsweise folgende Zusammensetzung:

| **Komponente** | **Konzentrationsbereich von - bis ( mol-%)** | |
|---|---|---|
| B₂O₃ | 10 | 70 |
| SiO₂ | > 0 | 40 |
| Bi₂O₃ | 20 | 45 |
| SiO₂+Bi₂O₃ | 50 | 100 |
| Al₂O₃ | 0 | 20 |
| ZnO | 0 | 40 |
| Al₂O₃+ZnO | 0 | 60 |
| SnO₂ | 0 | 10 |
| TiO₂ | 0 | 20 |
| ZrO₂ | 0 | 10 |
| WO₃ | 0 | 10 |
| MoO3 | 0 | 10 |
| Nb₂O₅ | 0 | 10 |
| Ta₂O₅ | 0 | 10 |
| Nb₂O₅ + Ta₂O₅ | 0 | 20 |
| MgO | 0 | 15 |
| CaO | 0 | 15 |
| SrO | 0 | 15 |
| BaO | 0 | 15 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 10 |
| GeO₂ | 0 | 10 |

Bei einer anderen bevorzugten Ausführungsform kann das Multikomponentenglas als "Niob-Tantal-Silikatglas" klassifiziert werden. In diesem Fall hat das Multikomponentenglas vorzugsweise folgende Zusammensetzung:

| **Komponente** | **Konzentrationsbereich von - bis ( mol-%)** | |
|---|---|---|
| B₂O₃ | 10 | 70 |
| SiO₂ | > 0 | 40 |
| Bi₂O₃ | 0 | 20 |
| SiO₂+Bi₂O₃ | 20 | 70 |
| Al₂O₃ | 0 | 20 |
| ZnO | 0 | 30 |
| Al₂O₃+ZnO | 0 | 40 |
| SnO₂ | 0 | 10 |
| TiO₂ | 0 | 20 |
| ZrO₂ | 0 | 10 |
| WO₃ | 0 | 10 |
| MoO3 | 0 | 10 |
| Nb₂O₅ | 5 | 50 |
| Ta₂O₅ | 0 | 30 |
| Nb₂O₅ + Ta₂O₅ | 5 | 50 |
| MgO | 0 | 15 |
| CaO | 0 | 15 |
| SrO | 0 | 15 |
| BaO | 0 | 15 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 10 |
| GeO₂ | 0 | 10 |

Bei einer anderen bevorzugten Ausführungsform kann das Multikomponentenglas als "Titan-Silikatglas" klassifiziert werden. In diesem Fall hat das Multikomponentenglas vorzugsweise folgende Zusammensetzung:

| **Komponente** | **Konzentrationsbereich von - bis ( mol-%)** | |
|---|---|---|
| B₂O₃ | 10 | 70 |
| SiO₂ | > 0 | 40 |
| Bi₂O₃ | 0 | 20 |
| SiO₂+Bi₂O₃ | 30 | 80 |
| Al₂O₃ | 0 | 20 |
| ZnO | 0 | 30 |
| Al₂O₃+ZnO | 0 | 40 |
| SnO₂ | 0 | 10 |
| TiO₂ | 5 | 35 |
| ZrO₂ | 0 | 10 |
| WO₃ | 0 | 10 |
| MoO3 | 0 | 10 |
| Nb₂O₅ | 0 | 10 |
| Ta₂O₅ | 0 | 10 |
| Nb₂O₅ + Ta₂O₅ | 0 | 20 |
| MgO | 0 | 15 |
| CaO | 0 | 15 |
| SrO | 0 | 15 |
| BaO | 0 | 15 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 10 |
| GeO₂ | 0 | 10 |

Das Multikomponentenglas zeichnet sich durch eine hohe Reinheit aus, die sich exemplarisch darin ausdrückt, dass Verunreinigungen an Cr, Mn, Fe, Co und Ni und Verbindungen für jedes einzelne dieser Elemente weniger als 50 Gew.-ppm und besonders bevorzugt weniger als 20 Gew.-ppm beträgt, und dass die Summe der Verunreinigungen an Cr, Mn, Fe, Co und Ni weniger als 100 Gew.-ppm beträgt.

Hinsichtlich des Glasbauteils zum Einsatz in einem Trockenätzprozess in Kontakt mit einem Plasma und halogenhaltigem Ätzgas wird die oben angegebene technische Aufgabe durch ein Glasbauteil mit den Merkmalen von Anspruch 22 gelöst.

Aus dem Multikomponentenglas wird ein Glasbauteil erzeugt. Dies geschieht beispielsweise anhand eines Schmelzgießverfahrens. Dabei wird eine Glasschmelze aus dem Multikomponentenglas in einem Schmelzaggregat erzeugt, beispielsweise in einer Glasschmelzwanne oder in einem Schmelztiegel, und die Glasschmelze wird in eine Gießform eingelassen. Bei der Verarbeitung des Multikomponentenglases durch Gießen hat die Glasschmelze bevorzugt eine Viskosität im Bereich von 10¹ dPa·s bis 10⁴ dPa·s.

Das Glasbauteil oder mindestens seine Oberfläche, die im RIE-Prozess dem halogenhaltigen Ätzgas ausgesetzt ist, besteht aus einem Multikomponentenglas mit geringer Partikelbildung beim Trockenätzen. Dieses enthält SiO₂ mit einem Anteil im Bereich von 30 bis 80 mol-% - bevorzugt mindestens 40 mol-%, besonders bevorzugt mindestens 50 mol-% und ganz besonders bevorzugt mindestens 60 mol-% - und mindestens eine weitere Komponente, die mit halogenhaltigem Ätzgas ein volatiles Reaktionsprodukt bildet.

Bei einer bevorzugten Ausführungsform ist das Glasbauteil zum Einsatz in einem Trockenätzprozess in Kontakt mit einem Plasma und einem fluorhaltigen Ätzgas, ausgelegt, wobei es eine dem Ätzgas ausgesetzte Oberfläche aufweist, die aus einem Multikomponentenglas besteht, bei dem die mindestens eine weitere Komponente ein volatiles fluoridisches Reaktionsprodukt bildet, das eine niedrigere Verflüchtigungstemperatur aufweist als das chloridische und bromidische Reaktionsprodukt dieser Komponente. Beispielhafte und bevorzugte Komponenten dieser Art sind V₂O₅, MoO₃, WO₃ und GeO₂.

Bei einer anderen bevorzugten Ausführungsform ist das Glasbauteil zum Einsatz in einem Trockenätzprozess in Kontakt mit einem Plasma und einem chlor- oder bromhaltigen Ätzgas, ausgelegt, wobei es eine dem Ätzgas ausgesetzte Oberfläche aufweist, die aus einem Multikomponentenglas besteht, bei dem die mindestens eine weitere Komponente ein volatiles chloridisches oder bromidisches Reaktionsprodukt bildet, das eine niedrigere Verflüchtigungstemperatur aufweist als das fluoridisches Reaktionsprodukt dieser Komponente. Beispielhafte und bevorzugte Komponenten dieser Art sind Al₂O₃, Ga₂O, SnO₂, TiO₂, ZrO₂, HfO₂ und Bi₂O₃.

Das Glasbauteil ist beispielsweise ausgebildet als Kammerwandung eines Plasmaätzreaktors und/oder als Waferhalter, Heizeinrichtung, Pedestal, Stütz- oder Spannelement, Ringabdeckung, und insbesondere als Ätzring.

Merkmale in Bezug auf die chemische Zusammensetzung und andere Eigenschaften des Multikomponentenglases sind weiter oben erläutert und diese Erläuterungen werden hiermit für das Glasbauteil einbezogen.

### Definitionen und Messmethoden

Einzelne Begriffe der obigen Beschreibung werden im Folgenden ergänzend definiert. Die Definitionen sind Bestandteil der Beschreibung der Erfindung. Bei einem Widerspruch zwischen einer der folgenden Definitionen und der übrigen Beschreibung ist das in der übrigen Beschreibung Gesagte maßgeblich.

Für Begriffe und Messverfahren, die in der Beschreibung nicht speziell definiert sind, ist die Auslegung gemäß der Internationalen Fernmeldeunion (ITU; International Telecommunication Union) maßgeblich. Sofern für einen Parameter eine Messmethode nicht angegeben ist, so ist für diesen Parameter die Standard-Messmethode anzuwenden und insbesondere diejenige Messmethode, die in der entsprechenden ISO-Vorschrift niedergelegt ist, deren Veröffentlichungsdatum am nächsten vor dem der vorliegenden Anmeldung liegt. Sollten Messbedingungen nicht angegeben sein, so gelten als Standard-Bedingungen (SATP-Bedingungen) für die Temperatur 298,15 K (25°C, 77°F) und für den absoluten Druck 100 kPa (14,504 psi, 0.986 atm).

### Multikomponentengläser

Multikomponentengläser im Sinne der Erfindung enthalten neben Siliziumdioxid (SiO₂) mindestens eine weitere Komponente, die sich dadurch auszeichnet, dass sie eine Halogenverbindung bildet, die bei der Prozesstemperatur beim Trockenätzprozess volatil ist, also verdampft oder sublimiert.

Die "mindestens eine weitere Komponente" oder kurz: "die weitere Komponente" kann eine einzige weitere Komponente oder mehrere weitere Komponenten umfassen.

Die Prozesstemperatur beim reaktiven Ionenätzen (reactive ion etching / RIE) variiert je nach den spezifischen Anforderungen des Prozesses und den verwendeten Materialien und liegt in der Regel im Bereich von Raumtemperatur bis zu einigen hundert Grad Celsius.

### Zusammensetzung des Multikomponentenglases

Die Angabe "mol-%" bezieht sich sowohl auf die elementare Spezies der Komponente des Multikomponentenglases als solche als auch auf Verbindungen, die die Komponente in ionischer oder kovalenter Bindung enthalten.

Die Formulierung "hat eine Zusammensetzung" oder "besteht aus" soll auch umfassen, dass nicht ausdrücklich genannte, übliche und unvermeidliche Verunreinigungen in der Zusammensetzung enthalten sein können, deren Mengen nicht nennenswert sind und die nicht absichtlich zugesetzt werden.

Die Formulierung, wonach die Zusammensetzung eine bestimmte Komponente "nicht enthält" oder wonach die Zusammensetzung "frei ist" von einer Komponente ist so zu verstehen, dass die Komponente allenfalls als Verunreinigung - also einschließlich des hypothetischen Falls von 0 Gew.-% und jedenfalls nicht in nennenswerten Mengen - vorhanden ist und insbesondere nicht absichtlich zugesetzt wird.

Die Menge der Verunreinigung im Multikomponentenglas wird hier in Gew.-ppm angegeben. Unter einer "nicht nennenswerten Menge" sind weniger als 500 Gew.-ppm der Zusammensetzung, weniger als 5 Gew.-ppm, weniger als 0,5 Gew.-ppm oder weniger als 0,1 Gew.-ppm zu verstehen, bezogen auf die Masse des Multikomponentenglases.

Unter "Seltenerdmetalle" werden Scandium, Yttrium und die Lanthanoiden subsumiert.

### Messung der Viskosität

Das Multikomponentenglas wird im liquiden, niedrigviskosen Zustand zu Formkörpern gegossen. Die Viskosität der Schmelze liegt dabei im Bereich von 10¹ dPa·s bis 10⁴ dPa·s. Die Messung der Viskosität erfolgt mittels Scher- oder Rotationsviskosimetrie, wobei die in Tabelle 1 angegebenen Werte zur Viskosität und Dichte berechnet sind.

Anstelle in der Exponentialschreibweise werden Viskositätswerte häufig auch anhand des dekadischen Logarithmus in der Form Ig(dPa·s) angegeben.

### Messung der Trockenätzbeständigkeit

Zur Messung der Trockenätzbeständigkeit wird eine Probe des Multikomponentenglases in einem RIE-Plasmareaktor einer Standard-Trockenätzprozedur mit folgenden Behandlungsschritten unterzogen:
(a) Eine Planseite der Messprobe wird poliert, so dass sie eine Oberflächenrauigkeit mit einem Rₐ-Wert von 4 nm oder weniger aufweist.
(b) Eine Teilfläche der polierten Planseite wird mit einem Lack maskiert.
(c) Die polierte Planseite wird einer Trockenätzprozedur ausgesetzt, die durch folgende Parameter charakterisiert ist:
   - In die HF-Energiequelle wird eine Leistung von 600 Watt eingespeist.
   - Mittels der HF-Energiequelle wird bei einer Eingangsleistung von 10 Watt an der Messprobe eine Vorspannung von minus 100 Volt angelegt-
   - Folgende Prozessgase werden in die Reaktorkammer eingeleitet: 5 sccm Argon, 1 sccm CF₄, 0,3 sccm O₂.
   - Der Kammerdruck ist auf 6 Pa eingestellt.
   - Die Ätzdauer beträgt 60 Minuten.
(d) Unter Einsatz eines Profilmessgeräts wird die Stufenhöhe zwischen dem maskierten Bereich und dem nicht maskierten Bereich der Glasprobe vermessen.

Aus der Stufenhöhe wird die absolute Ätzrate Viskosit, die ein Maß für die Trockenätzbeständigkeit der Glasprobe darstellt.

### Abschätzung der Partikelbildung

Die Partikelbildung im RIE-Prozess wurde anhand der Zusammensetzung des Multikomponentenglases abgeschätzt. Der Abschätzung liegt die Annahme zugrunde, dass Komponenten nicht zur Partikelbildung beitragen, die beim RIE-Prozess bei einer Prozess-Temperatur um 250°C und in Abhängigkeit von der Zusammensetzung des halogenhaltigen Ätzgases (Fluor, Chlor oder Brom enthaltend) Fluoride, Chloride oder Bromide bilden, die geeignet sind, in die Gasphase überzugehen. Je höher der Anteil solcher Komponenten im Multikomponentenglas ist, umso geringer ist die abgeschätzte Partikelbildung.

Die vorliegende Erfindung betrifft darüber hinaus plasmaresistente Gläser aus dem System der Borate, wobei sich die nachfolgenden Angaben "mol-%" auf die Gesamtzusammensetzung dieser erfindungsgemäßen plasmaresistenten Gläser bezieht.

Die erfindungsgemäßen plasmaresistenten Gläser umfassen 10 bis 70 mol-% B₂O₃ als Glasbildner und optional mindestens einen weiteren Glasbildner, ausgewählt aus der Gruppe, bestehend aus SiO₂, WO₃, Bi₂O₃ und Mischungen davon.

Die erfindungsgemäßen plasmaresistenten Gläser umfassen somit in einer ersten Ausgestaltung 10 bis 70 mol-% B₂O₃ als Glasbildner ("Boratgläser").

Die erfindungsgemäßen plasmaresistenten Gläser umfassen in einer zweiten Ausgestaltung 10 bis 70 mol-% B₂O₃ und zusätzlich WO₃ als Glasbildner ("Wolfram-Boratgläser"). In dieser zweiten Ausgestaltung umfassen die plasmaresistenten Gläser vorzugsweise 10 bis 60 mol-% WO₃.

Die erfindungsgemäßen plasmaresistenten Gläser umfassen in einer dritten Ausgestaltung 10 bis 70 mol-% B₂O₃ und zusätzlich Bi₂O₃ als Glasbildner ("Bismut-Boratgläser"). In dieser dritten Ausgestaltung umfassen die plasmaresistenten Gläser vorzugsweise 10 bis 60 mol-% Bi₂O₃.

Die erfindungsgemäßen plasmaresistenten Gläser umfassen in einer vierten Ausgestaltung 10 bis 70 mol-% B₂O₃ und zusätzlich SiO₂ als Glasbildner ("Silizium-Boratgläser"). In dieser vierten Ausgestaltung umfassen die plasmaresistenten Gläser vorzugsweise 5 bis 40 mol-% SiO₂.

Die erfindungsgemäßen plasmaresistenten Gläser umfassen in einer fünften Ausgestaltung 10 bis 70 mol-% B₂O₃, 5 bis 40 mol-% SiO₂ und 10 bis 60 mol-% Bi₂O₃ als Glasbildner ("Bismut-Silizium-Boratglas").

Die erfindungsgemäßen plasmaresistenten Gläser umfassen vorzugsweise eine Gesamtmenge an Glasbildnern von 50 bis 100 mol-%.

Daher betrifft die vorliegende Erfindung insbesondere plasmaresistente Gläser, umfassend 10 bis 70 mol-% B₂O₃ als Glasbildner und optional mindestens einen weiteren Glasbildner, ausgewählt aus der Gruppe, bestehend aus SiO₂, WO₃, Bi₂O₃ und Mischungen davon, wobei die Gesamtmenge an Glasbildnern von 50 bis 100 mol-% beträgt.

Daher betrifft die vorliegende Erfindung insbesondere plasmaresistente Gläser, umfassend 10 bis 70 mol-% B₂O₃ als Glasbildner ("Boratgläser"), wobei die Gesamtmenge an Glasbildnern von 50 bis 100 mol-% beträgt.

Daher betrifft die vorliegende Erfindung insbesondere plasmaresistente Gläser, umfassend 10 bis 70 mol-% B₂O₃ und 10 bis 60 mol-% WO₃ als Glasbildner ("Wolfram-Boratgläser"), wobei die Gesamtmenge an Glasbildnern von 50 bis 100 mol-% beträgt.

Daher betrifft die vorliegende Erfindung insbesondere plasmaresistente Gläser, umfassend 10 bis 70 mol-% B₂O₃ und 10 bis 60 mol-% Bi₂O₃ als Glasbildner ("Bismut-Boratgläser"), wobei die Gesamtmenge an Glasbildnern von 50 bis 100 mol-% beträgt.

Daher betrifft die vorliegende Erfindung insbesondere plasmaresistente Gläser, umfassend 10 bis 70 mol-% B₂O₃ und 5 bis 40 mol-% SiO₂ als Glasbildner ("Silizium-Boratgläser"), wobei die Gesamtmenge an Glasbildnern von 50 bis 100 mol-% beträgt.

Daher betrifft die vorliegende Erfindung insbesondere plasmaresistente Gläser, umfassend 10 bis 70 mol-% B₂O₃, 5 bis 40 mol-% SiO₂ und 10 bis 60 mol-% Bi₂O₃ als Glasbildner ("Bismut-Silizium-Boratglas"), wobei die Gesamtmenge an Glasbildnern von 50 bis 100 mol-% beträgt.

Die erfindungsgemäßen plasmaresistenten Gläser sind vorzugsweise frei von Alkalioxiden.

Die erfindungsgemäßen plasmaresistenten Gläser sind vorzugsweise frei von Erdalkalioxiden.

Die erfindungsgemäßen plasmaresistenten Gläser sind vorzugsweise frei von Alkalioxiden und Erdalkalioxiden.

Die plasmaresistenten Gläser können zusätzlich zu den vorstehend genannten Glasbildnern auch weitere Komponenten umfassen, ausgewählt aus der Gruppe bestehend aus Al₂O₃, ZnO, SnO₂, TiO₂, ZrO₂, MoO₃, Nb₂O₅, Ta₂O₅, MgO, CaO, SrO, BaO, HfO₂, V₂O₅, GeO₂ und Seltenerdoxide.

Erfindungsgemäß werden die Seltenerdoxide, die als weitere Komponente in den erfindungsgemäßen plasmaresistenten Gläsern zusätzlich umfasst sein können, ausgewählt aus der Gruppe bestehend aus Oxiden der Elemente: La, Y, Nd, Sm, Er, Ce, Eu, Gd, Yb, Pr, Tm, Dy, Sc, Ho, Lu und Tb.

Besonders bevorzugt sind die Seltenerdoxide, die als weitere Komponente in den erfindungsgemäßen plasmaresistenten Gläsern zusätzlich umfasst sein können, ausgewählt aus der Gruppe bestehend aus Oxiden der Elemente: La, Y, Sm, Er, Eu, Gd, und Yb.

In einer bevorzugten Ausführungsform der ersten Ausgestaltung des erfindungsgemäßen plasmaresistenten Glases, welches als "Boratglas" klassifiziert werden kann, hat das plasmaresistente Glas vorzugsweise folgende Zusammensetzung:

| **Komponente** | **Konzentrationsbereich von - bis (mol-%)** | |
|---|---|---|
| B₂O₃ | 10 | 70 |
| WO₃ | 0 | 70 |
| Bi₂O₃ | 0 | 60 |
| SiO₂ | 0 | 40 |
| Al₂O₃ | 0 | 10 |
| ZnO | 0 | 5 |
| SnO₂ | 0 | 15 |
| TiO₂ | 0 | 25 |
| ZrO₂ | 0 | 25 |
| MoO₃ | 0 | 60 |
| Nb₂O₅ | 0 | 40 |
| Ta₂O₅ | 0 | 30 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| SiO₂ | 0 | 40 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 20 |
| GeO₂ | 0 | 10 |
| Summe "B₂O₃ + Bi₂O₃ + WO₃ + SiO₂" | 70 | 100 |

In einer weiteren bevorzugten Ausführungsform der ersten Ausgestaltung hat das "Boratglas" vorzugsweise folgende Zusammensetzung:

| **Komponente** | **Konzentrationsbereich von - bis (mol-%)** | |
|---|---|---|
| B₂O₃ | 10 | 70 |
| WO₃ | 0 | 70 |
| Bi₂O₃ | 0 | 60 |
| SiO₂ | 0 | 25 |
| Al₂O₃ | 0 | 5 |
| ZnO | 0 | 3 |
| SnO₂ | 0 | 5 |
| TiO₂ | 0 | 25 |
| ZrO₂ | 0 | 25 |
| MoO₃ | 0 | 60 |
| Nb₂O₅ | 0 | 40 |
| Ta₂O₅ | 0 | 30 |
| Nb₂O₅ + Ta₂O₅ | 0 | 40 |
| MgO | 0 | 5 |
| CaO | 0 | 5 |
| SrO | 0 | 5 |
| BaO | 0 | 5 |
| Summe Alkali- und Erdalkalioxide | 0 | 15 |
| Seltenerdmetall-Oxide (jeweils) | 0 | 20 |
| Summe Seltenerdmetall-Oxide | 0 | 30 |
| HfO₂ | 0 | 5 |
| V₂O₅ | 0 | 20 |
| GeO₂ | 0 | 5 |
| Summe "B₂O₃ + Bi₂O₃ + WO₃ + SiO₂" | 70 | 100 |

In einer noch weiter bevorzugten Ausführungsform der ersten Ausgestaltung hat das "Boratglas" vorzugsweise folgende Zusammensetzung:

| **Komponente** | **Konzentrationsbereich von - bis (mol-%)** | |
|---|---|---|
| B₂O₃ | 10 | 70 |
| WO₃ | 0 | 70 |
| Bi₂O₃ | 0 | 60 |
| SiO₂ | 0 | 0 |
| Al₂O₃ | 0 | 0 |
| ZnO | 0 | 0 |
| SnO₂ | 0 | 0 |
| TiO₂ | 0 | 25 |
| ZrO₂ | 0 | 25 |
| MoO₃ | 0 | 60 |
| Nb₂O₅ | 0 | 40 |
| Ta₂O₅ | 0 | 30 |
| Nb₂O₅ + Ta₂O₅ | 0 | 40 |
| MgO | 0 | 0 |
| CaO | 0 | 0 |
| SrO | 0 | 0 |
| BaO | 0 | 0 |
| Summe Alkali- und Erdalkalioxide | 0 | 15 |
| Seltenerdmetall-Oxide (jeweils) | 0 | 20 |
| Summe Seltenerdmetall-Oxide | 0 | 20 |
| HfO₂ | 0 | 0 |
| V₂O₅ | 0 | 20 |
| GeO₂ | 0 | 0 |
| Summe "B₂O₃ + Bi₂O₃ + WO₃ + SiO₂" | 70 | 100 |

In einer bevorzugten Ausführungsform der zweiten Ausgestaltung des erfindungsgemäßen plasmaresistenten Glases, welches als "Wolfram-Boratglas" klassifiziert werden kann, hat das plasmaresistente Glas vorzugsweise folgende Zusammensetzung:

| **Komponente** | **Konzentrationsbereich von - bis (mol-%)** | |
|---|---|---|
| B₂O₃ | 10 | 70 |
| WO₃ | 10 | 60 |
| Bi₂O₃ | 0 | 20 |
| SiO₂ | 0 | 25 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 50 |
| Nb₂O₅ | 0 | 30 |
| Ta₂O₅ | 0 | 20 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 20 |
| GeO₂ | 0 | 10 |
| MoO₃ + WO₃ | 10 | 60 |
| Summe "alle außer B₂O₃ + MoO₃ + WO₃ | 0 | 40 |
| Summe "B₂O₃ + Bi₂O₃ + WO₃ + SiO₂" | 70 | 100 |

In einer weiteren bevorzugten Ausführungsform der zweiten Ausgestaltung hat das "Wolfram-Boratglas" vorzugsweise folgende Zusammensetzung:

| **Komponente** | **Konzentrationsbereich von - bis (mol-%)** | |
|---|---|---|
| B₂O₃ | 10 | 70 |
| WO₃ | 10 | 60 |
| Bi₂O₃ | 0 | 20 |
| SiO₂ | 0 | 20 |
| Al₂O₃ | 0 | 5 |
| ZnO | 0 | 3 |
| SnO₂ | 0 | 5 |
| TiO₂ | 0 | 20 |
| ZrO₂ | 0 | 20 |
| MoO₃ | 0 | 50 |
| Nb₂O₅ | 0 | 30 |
| Ta₂O₅ | 0 | 20 |
| Nb₂O₅ + Ta₂O₅ | 0 | 40 |
| MgO | 0 | 5 |
| CaO | 0 | 5 |
| SrO | 0 | 5 |
| BaO | 0 | 5 |
| Summe Alkali- und Erdalkalioxide | 0 | 15 |
| Seltenerdmetall-Oxide (jeweils) | 0 | 20 |
| Summe Seltenerdmetall-Oxide | 0 | 30 |
| HfO₂ | 0 | 5 |
| V₂O₅ | 0 | 20 |
| GeO₂ | 0 | 5 |
| MoO₃ + WO₃ | 10 | 60 |
| Summe "alle außer B₂O₃ + MoO₃ + WO₃ | 0 | 40 |
| Summe "B₂O₃ + Bi₂O₃ + WO₃ + SiO₂" | 70 | 100 |

In einer noch weiter bevorzugten Ausführungsform der zweiten Ausgestaltung hat das "Wolfram-Boratglas" vorzugsweise folgende Zusammensetzung:

| **Komponente** | **Konzentrationsbereich von - bis (mol-%)** | |
|---|---|---|
| B₂O₃ | 10 | 70 |
| WO₃ | 10 | 60 |
| Bi₂O₃ | 0 | 20 |
| SiO₂ | 0 | 0 |
| Al₂O₃ | 0 | 0 |
| ZnO | 0 | 0 |
| SnO₂ | 0 | 0 |
| TiO₂ | 0 | 20 |
| ZrO₂ | 0 | 20 |
| MoO₃ | 0 | 50 |
| Nb₂O₅ | 0 | 30 |
| Ta₂O₅ | 0 | 20 |
| Nb₂O₅ + Ta₂O₅ | 0 | 40 |
| MgO | 0 | 0 |
| CaO | 0 | 0 |
| SrO | 0 | 0 |
| BaO | 0 | 0 |
| Summe Alkali- und Erdalkalioxide | 0 | 15 |
| Seltenerdmetall-Oxide (jeweils) | 0 | 20 |
| Summe Seltenerdmetall-Oxide | 0 | 30 |
| HfO₂ | 0 | 0 |
| V₂O₅ | 0 | 20 |
| GeO₂ | 0 | 0 |
| MoO₃ + WO₃ | 10 | 60 |
| Summe "alle außer B₂O₃ + MoO₃ + WO₃ | 0 | 40 |
| Summe "B₂O₃ + Bi₂O₃ + WO₃ + SiO₂" | 70 | 100 |

In einer besonders bevorzugten Ausführungsform der zweiten Ausgestaltung hat das "Wolfram-Boratglas" vorzugsweise folgende Zusammensetzung:

| **Komponente** | **Konzentrationsbereich von - bis (mol-%)** | |
|---|---|---|
| B₂O₃ | 25 | 45 |
| WO₃ | 35 | 45 |
| Bi₂O₃ | 0 | 20 |
| SiO₂ | 0 | 25 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 50 |
| Nb₂O₅ | 0 | 30 |
| Ta₂O₅ | 0 | 20 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 10 | 30 |
| Summe Seltenerdmetall-Oxide | 10 | 40 |
| HfO₂ | 0 | 10 |
| V₂O₅ | 0 | 20 |
| GeO₂ | 0 | 10 |
| MoO₃ + WO₃ | 10 | 60 |
| Summe "alle außer B₂O₃ + MoO₃ + WO₃ | 0 | 40 |
| Summe "B₂O₃ + Bi₂O₃ + WO₃ + SiO₂" | 70 | 100 |

In einer weiteren besonders bevorzugten Ausführungsform der zweiten Ausgestaltung hat das "Wolfram-Boratglas" vorzugsweise folgende Zusammensetzung:

| **Komponente** | **Konzentrationsbereich von - bis (mol-%)** | |
|---|---|---|
| B₂O₃ | 30 | 45 |
| WO₃ | 35 | 45 |
| Summe der Oxide der Elemente: La, Y, Sm, Er, Eu, Gd, und Yb | 15 | 30 |

In einer weiteren besonders bevorzugten Ausführungsform der zweiten Ausgestaltung hat das "Wolfram-Boratglas" vorzugsweise folgende Zusammensetzung:

| **Komponente** | **Konzentrationsbereich von - bis (mol-%)** | |
|---|---|---|
| B₂O₃ | 30 | 45 |
| WO₃ | 35 | 45 |
| La₂O₃ | 15 | 30 |

In einer weiteren besonders bevorzugten Ausführungsform der zweiten Ausgestaltung hat das "Wolfram-Boratglas" vorzugsweise folgende Zusammensetzung:

| **Komponente** | **Konzentrationsbereich von - bis (mol-%)** | |
|---|---|---|
| B₂O₃ | 45 | 65 |
| WO₃ | 15 | 30 |
| Bi₂O₃ | 0 | 20 |
| SiO₂ | 0 | 25 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 50 |
| Nb₂O₅ | 0 | 30 |
| Ta₂O₅ | 0 | 20 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 10 | 30 |
| Summe Seltenerdmetall-Oxide | 10 | 40 |
| HfO₂ | 0 | 10 |
| V₂O₅ | 0 | 20 |
| GeO₂ | 0 | 10 |
| MoO₃ + WO₃ | 10 | 60 |
| Summe "alle außer B₂O₃ + MoO₃ + WO₃ | 0 | 40 |
| Summe "B₂O₃ + Bi₂O₃ + WO₃ + SiO₂" | 70 | 100 |

In einer noch weiter bevorzugten Ausführungsform der zweiten Ausgestaltung hat das "Wolfram-Boratglas" vorzugsweise folgende Zusammensetzung:

| **Komponente** | **Konzentrationsbereich von - bis (mol-%)** | |
|---|---|---|
| B₂O₃ | 50 | 65 |
| WO₃ | 15 | 25 |
| Summe der Oxide der Elemente: La, Y, Sm, Er, Eu, Gd, und Yb | 15 | 30 |

In einer noch weiter bevorzugten Ausführungsform der zweiten Ausgestaltung hat das "Wolfram-Boratglas" vorzugsweise folgende Zusammensetzung:

| **Komponente** | **Konzentrationsbereich von - bis (mol-%)** | |
|---|---|---|
| B₂O₃ | 50 | 65 |
| WO₃ | 15 | 25 |
| La₂O₃ | 15 | 30 |

In einer bevorzugten Ausführungsform der dritten Ausgestaltung des erfindungsgemäßen plasmaresistenten Glases, welches als "Bismut-Boratglas" klassifiziert werden kann, hat das plasmaresistente Glas vorzugsweise folgende Zusammensetzung:

| **Komponente** | **Konzentrationsbereich von - bis (mol-%)** | |
|---|---|---|
| B₂O₃ | 10 | 70 |
| WO₃ | 0 | 60 |
| Bi₂O₃ | 10 | 60 |
| SiO₂ | 0 | 40 |
| Al₂O₃ | 0 | 10 |
| ZnO | 0 | 5 |
| SnO₂ | 0 | 15 |
| TiO₂ | 0 | 25 |
| ZrO₂ | 0 | 25 |
| MoO₃ | 0 | 60 |
| Nb₂O₅ | 0 | 40 |
| Ta₂O₅ | 0 | 30 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 20 |
| GeO₂ | 0 | 10 |
| Summe "B₂O₃ + Bi₂O₃ + WO₃ + SiO₂" | 70 | 100 |

In einer weiteren bevorzugten Ausführungsform der dritten Ausgestaltung hat das "Bismut-Boratglas" vorzugsweise folgende Zusammensetzung:

| **Komponente** | **Konzentrationsbereich von - bis (mol-%)** | |
|---|---|---|
| B₂O₃ | 15 | 65 |
| WO₃ | 0 | 50 |
| Bi₂O₃ | 15 | 55 |
| SiO₂ | 0 | 35 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 50 |
| Nb₂O₅ | 0 | 40 |
| Ta₂O₅ | 0 | 25 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 20 |
| GeO₂ | 0 | 10 |
| Summe "B₂O₃ + Bi₂O₃ + WO₃ + SiO₂" | 70 | 100 |

In einer noch weiter bevorzugten Ausführungsform der dritten Ausgestaltung hat das "Bismut-Boratglas" vorzugsweise folgende Zusammensetzung:

| **Komponente** | **Konzentrationsbereich von - bis (mol-%)** | |
|---|---|---|
| B₂O₃ | 20 | 60 |
| WO₃ | 0 | 40 |
| Bi₂O₃ | 20 | 55 |
| SiO₂ | 0 | 30 |
| Al₂O₃ | 0 | 5 |
| ZnO | 0 | 3 |
| SnO₂ | 0 | 5 |
| TiO₂ | 0 | 15 |
| ZrO₂ | 0 | 15 |
| MoO₃ | 0 | 40 |
| Nb₂O₅ | 0 | 40 |
| Ta₂O₅ | 0 | 20 |
| Nb₂O₅ + Ta₂O₅ | 0 | 40 |
| MgO | 0 | 5 |
| CaO | 0 | 5 |
| SrO | 0 | 5 |
| BaO | 0 | 5 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 5 |
| V₂O₅ | 0 | 20 |
| GeO₂ | 0 | 5 |
| Summe "B₂O₃ + Bi₂O₃ + WO₃ + SiO₂" | 70 | 100 |

In einer bevorzugten Ausführungsform der vierten Ausgestaltung des erfindungsgemäßen plasmaresistenten Glases, welches als "Silizium-Boratglas" klassifiziert werden kann, hat das plasmaresistente Glas vorzugsweise folgende Zusammensetzung:

| **Komponente** | **Konzentrationsbereich von - bis (mol-%)** | |
|---|---|---|
| B₂O₃ | 10 | 70 |
| WO₃ | 0 | 60 |
| Bi₂O₃ | 0 | 60 |
| SiO₂ | 5 | 40 |
| Al₂O₃ | 0 | 10 |
| ZnO | 0 | 5 |
| SnO₂ | 0 | 15 |
| TiO₂ | 0 | 25 |
| ZrO₂ | 0 | 25 |
| MoO₃ | 0 | 60 |
| Nb₂O₅ | 0 | 40 |
| Ta₂O₅ | 0 | 30 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 20 |
| GeO₂ | 0 | 10 |
| Summe "B₂O₃ + Bi₂O₃ + WO₃ + SiO₂" | 70 | 100 |

In einer weiteren bevorzugten Ausführungsform der vierten Ausgestaltung hat das "Silizium-Boratglas" vorzugsweise folgende Zusammensetzung:

| **Komponente** | **Konzentrationsbereich von - bis (mol-%)** | |
|---|---|---|
| B₂O₃ | 15 | 65 |
| WO₃ | 0 | 50 |
| Bi₂O₃ | 0 | 55 |
| SiO₂ | 5 | 35 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 50 |
| Nb₂O₅ | 0 | 40 |
| Ta₂O₅ | 0 | 25 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 10 |
| V₂O₅ | 0 | 20 |
| GeO₂ | 0 | 10 |
| Summe "B₂O₃ + Bi₂O₃ + WO₃ + SiO₂" | 70 | 100 |

In einer noch weiter bevorzugten Ausführungsform der vierten Ausgestaltung hat das "Silizium-Boratglas" vorzugsweise folgende Zusammensetzung:

| **Komponente** | **Konzentrationsbereich von - bis (mol-%)** | |
|---|---|---|
| B₂O₃ | 20 | 60 |
| WO₃ | 0 | 40 |
| Bi₂O₃ | 0 | 55 |
| SiO₂ | 5 | 30 |
| Al₂O₃ | 0 | 5 |
| ZnO | 0 | 3 |
| SnO₂ | 0 | 5 |
| TiO₂ | 0 | 15 |
| ZrO₂ | 0 | 15 |
| MoO₃ | 0 | 40 |
| Nb₂O₅ | 0 | 40 |
| Ta₂O₅ | 0 | 20 |
| Nb₂O₅ + Ta₂O₅ | 0 | 40 |
| MgO | 0 | 5 |
| CaO | 0 | 5 |
| SrO | 0 | 5 |
| BaO | 0 | 5 |
| Summe Alkali- und Erdalkalioxide | 0 | 15 |
| Seltenerdmetall-Oxide (jeweils) | 0 | 30 |
| Summe Seltenerdmetall-Oxide | 0 | 40 |
| HfO₂ | 0 | 5 |
| V₂O₅ | 0 | 20 |
| GeO₂ | 0 | 5 |
| Summe "B₂O₃ + Bi₂O₃ + WO₃ + SiO₂" | 70 | 100 |

In einer bevorzugten Ausführungsform der fünften Ausgestaltung des erfindungsgemäßen plasmaresistenten Glases, welches als "Bismut-Silizium-Boratglas" klassifiziert werden kann, hat das plasmaresistente Glas vorzugsweise folgende Zusammensetzung:

| **Komponente** | **Konzentrationsbereich von - bis (mol-%)** | |
|---|---|---|
| B₂O₃ | 10 | 70 |
| WO₃ | 0 | 20 |
| Bi₂O₃ | 10 | 60 |
| SiO₂ | 5 | 40 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 20 |
| Nb₂O₅ | 0 | 30 |
| Ta₂O₅ | 0 | 20 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 30 |
| Summe Seltenerdmetall-Oxide | 0 | 30 |
| HfO₂ | 0 | 10 |
| V₂O₅ | 0 | 20 |
| GeO₂ | 0 | 10 |
| Summe "alle außer SiO₂ - B₂O₃ - Bi₂O₃" | 0 | 40 |
| Summe "B₂O₃ + Bi₂O₃ + WO₃ + SiO₂" | 70 | 100 |

In einer besonders bevorzugten Ausführungsform der fünften Ausgestaltung hat das "Bismut-Silizium-Boratglas" vorzugsweise folgende Zusammensetzung:

| **Komponente** | **Konzentrationsbereich von - bis (mol-%)** | |
|---|---|---|
| B₂O₃ | 20 | 60 |
| WO₃ | 0 | 20 |
| Bi₂O₃ | 15 | 60 |
| SiO₂ | 10 | 40 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 20 |
| Nb₂O₅ | 0 | 30 |
| Ta₂O₅ | 0 | 20 |
| Nb₂O₅ + Ta₂O₅ | 0 | 40 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 30 |
| Summe Seltenerdmetall-Oxide | 0 | 30 |
| HfO₂ | 0 | 10 |
| V₂O₅ | 0 | 20 |
| GeO₂ | 0 | 10 |
| Summe "alle außer SiO₂ - B₂O₃ - Bi₂O₃" | 0 | 40 |
| Summe "B₂O₃ + Bi₂O₃ + WO₃ + SiO₂" | 70 | 100 |

In einer weiteren besonders bevorzugten Ausführungsform der fünften Ausgestaltung hat das "Bismut-Silizium-Boratglas" vorzugsweise folgende Zusammensetzung:

| **Komponente** | **Konzentrationsbereich von - bis (mol-%)** | |
|---|---|---|
| B₂O₃ | 10 | 30 |
| WO₃ | 0 | 20 |
| Bi₂O₃ | 40 | 55 |
| SiO₂ | 25 | 40 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 20 |
| Nb₂O₅ | 0 | 25 |
| Ta₂O₅ | 0 | 20 |
| Nb₂O₅ + Ta₂O₅ | 0 | 25 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 25 |
| Summe Seltenerdmetall-Oxide | 0 | 25 |
| HfO₂ | 0 | 10 |
| V₂O₅ | 0 | 20 |
| GeO₂ | 0 | 10 |
| Summe "alle außer SiO₂ - B₂O₃ - Bi₂O₃" | 0 | 25 |
| Summe "B₂O₃ + Bi₂O₃ + WO₃ + SiO₂" | 70 | 100 |

In einer weiteren besonders bevorzugten Ausführungsform der fünften Ausgestaltung hat das "Bismut-Silizium-Boratglas" vorzugsweise folgende Zusammensetzung:

| **Komponente** | **Konzentrationsbereich von** - **bis (mol-%)** | |
|---|---|---|
| B₂O₃ | 15 | 25 |
| Bi₂O₃ | 45 | 55 |
| SiO₂ | 25 | 35 |

In einer weiteren besonders bevorzugten Ausführungsform der fünften Ausgestaltung hat das "Bismut-Silizium-Boratglas" vorzugsweise folgende Zusammensetzung:

| **Komponente** | **Konzentrationsbereich von - bis (mol-%)** | |
|---|---|---|
| B₂O₃ | 30 | 50 |
| WO₃ | 0 | 20 |
| Bi₂O₃ | 40 | 55 |
| SiO₂ | 5 | 20 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 20 |
| Nb₂O₅ | 0 | 25 |
| Ta₂O₅ | 0 | 20 |
| Nb₂O₅ + Ta₂O₅ | 0 | 25 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 25 |
| Summe Seltenerdmetall-Oxide | 0 | 25 |
| HfO₂ | 0 | 10 |
| V₂O₅ | 0 | 20 |
| GeO₂ | 0 | 10 |
| Summe "alle außer SiO₂ - B₂O₃ - Bi₂O₃" | 0 | 25 |
| Summe "B₂O₃ + Bi₂O₃ + WO₃ + SiO₂" | 70 | 100 |

In einer weiteren besonders bevorzugten Ausführungsform der fünften Ausgestaltung hat das "Bismut-Silizium-Boratglas" vorzugsweise folgende Zusammensetzung:

| **Komponente** | **Konzentrationsbereich von - bis (mol-%)** | |
|---|---|---|
| B₂O₃ | 35 | 45 |
| Bi₂O₃ | 45 | 55 |
| SiO₂ | 5 | 15 |

In einer weiteren besonders bevorzugten Ausführungsform der fünften Ausgestaltung hat das "Bismut-Silizium-Boratglas" vorzugsweise folgende Zusammensetzung:

| **Komponente** | **Konzentrationsbereich von - bis (mol-%)** | |
|---|---|---|
| B₂O₃ | 30 | 50 |
| WO₃ | 0 | 20 |
| Bi₂O₃ | 30 | 45 |
| SiO₂ | 15 | 25 |
| Al₂O₃ | 0 | 10 |
| ZnO | 0 | 5 |
| SnO₂ | 0 | 10 |
| TiO₂ | 0 | 20 |
| ZrO₂ | 0 | 20 |
| MoO₃ | 0 | 20 |
| Nb₂O₅ | 0 | 25 |
| Ta₂O₅ | 0 | 20 |
| Nb₂O₅ + Ta₂O₅ | 0 | 25 |
| MgO | 0 | 10 |
| CaO | 0 | 10 |
| SrO | 0 | 10 |
| BaO | 0 | 10 |
| Summe Alkali- und Erdalkalioxide | 0 | 15 |
| Seltenerdmetall-Oxide (jeweils) | 0 | 25 |
| Summe Seltenerdmetall-Oxide | 0 | 25 |
| HfO₂ | 0 | 10 |
| V₂O₅ | 0 | 20 |
| GeO₂ | 0 | 10 |
| Summe "alle außer SiO₂ - B₂O₃ - Bi₂O₃" | 0 | 25 |
| Summe "B₂O₃ + Bi₂O₃ + WO₃ + SiO₂" | 70 | 100 |

In einer weiteren besonders bevorzugten Ausführungsform der fünften Ausgestaltung hat das "Bismut-Silizium-Boratglas" vorzugsweise folgende Zusammensetzung:

| **Komponente** | **Konzentrationsbereich von - bis (mol-%)** | |
|---|---|---|
| B₂O₃ | 35 | 45 |
| Bi₂O₃ | 35 | 45 |
| SiO₂ | 15 | 25 |

Erfindungsgemäß umfassen die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung (Bismut-Silizium-Boratgläser"), B₂O₃ in einer Menge von 10-70 mol-%, 10-65 mol-%, 10-60 mol-%, 10-55 mol-%, 10-50 mol-%, 10-45 mol-%, 10-30 mol-%, 10-25 mol-%, 10-20 mol-%, 10-15 mol-%, 15-70 mol-%, 15-65 mol-%, 15-60 mol-%, 15-55 mol-%, 15-50 mol-%, 15-45 mol-%, 15-30 mol-%, 15-25 mol-%, 15-20 mol-%, 20-70 mol-%, 20-65 mol-%, 20-60 mol-%, 20-55 mol-%, 20-50 mol-%,20-45 mol-%, 20-30 mol-%, 20-25 mol-%, 25-70 mol-%, 25-65 mol-%, 25-60 mol-%, 25-55 mol-%, 25-50 mol-%, 25-45 mol-%, 25-40 mol-%, 25-35 mol-%, 25-30 mol-%, 30-70 mol-%, 30-65 mol-%, 30-60 mol-%, 30-55 mol-%, 30-50 mol-%, 30-45 mol-%, 30-40 mol-%, 30-35 mol-%, 35-70 mol-%, 35-65 mol-%, 35-60 mol-%, 35-55 mol-%, 35-50 mol-%, 35-45 mol-%, 35-40 mol-%, 40-70 mol-%, 40-65 mol-%, 40-60 mol-%, 40-55 mol-%, 40-50 mol-%, 40-45 mol-%, 45-70 mol-%, 45-65 mol-%, 45-60 mol-%, 45-55 mol-%, 45-50 mol-%, 50-70 mol-%, 50-65 mol-%, 50-60 mol-%, 50-55 mol-%, 55-70 mol-%, 55-65 mol-%, 55-60 mol-%, 60-70 mol-%, 60-65 mol-%, 65-70 mol-% bezogen auf die Gesamtzusammensetzung der erfindungsgemäßen plasmaresistenten Gläser.

Erfindungsgemäß umfassen die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung (Bismut-Silizium-Boratgläser"), WO₃ in einer Menge von 10-60 mol-%, 10-55 mol-%, 10-50 mol-%, 10-45 mol-%, 10-40 mol-%, 10-35 mol-%, 10-30 mol-%, 10-25 mol-%, 10-20 mol-%, 10-15 mol-%, 15-60 mol-%, 15-55 mol-%, 15-50 mol-%, 15-45 mol-%, 15-40 mol-%, 15-35 mol-%, 15-30 mol-%, 15-25 mol-%, 15-20 mol-%, 20-60 mol-%, 20-55 mol-%, 20-50 mol-%, 20-45 mol-%, 20-40 mol-%, 20-35 mol-%, 20-30 mol-%, 20-25 mol-%, 25-60 mol-%, 25-55 mol-%, 25-50 mol-%, 25-45 mol-%, 25-40 mol-%, 25-35 mol-%, 25-30 mol-%, 30-60 mol-%, 30-55 mol-%, 30-50 mol-%, 30-45 mol-%, 30-40 mol-%, 30-35 mol-%, 35-60 mol-%, 35-55 mol-%, 35-50 mol-%, 35-45 mol-%, 35-40 mol-%, 40-60 mol-%, 40-55 mol-%, 40-50 mol-%, 40-45 mol-%, 45-60 mol-%, 45-55 mol-%, 45-50 mol-%, 50-60 mol-%, 50-55 mol-%, 55-60 mol-%, bezogen auf die Gesamtzusammensetzung der erfindungsgemäßen plasmaresistenten Gläser.

Erfindungsgemäß umfassen die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung (Bismut-Silizium-Boratgläser"), Bi₂O₃ in einer Menge von 10-60 mol-%, 10-55 mol-%, 10-50 mol-%, 10-45 mol-%, 10-40 mol-%, 10-35 mol-%, 10-30 mol-%, 10-25 mol-%, 10-20 mol-%, 10-15 mol-%, 15-60 mol-%, 15-55 mol-%, 15-50 mol-%, 15-45 mol-%, 15-40 mol-%, 15-35 mol-%, 15-30 mol-%, 15-25 mol-%, 15-20 mol-%, 20-60 mol-%, 20-55 mol-%, 20-50 mol-%, 20-45 mol-%, 20-40 mol-%, 20-35 mol-%, 20-30 mol-%, 20-25 mol-%, 25-60 mol-%, 25-55 mol-%, 25-50 mol-%, 25-45 mol-%, 25-40 mol-%, 25-35 mol-%, 25-30 mol-%, 30-60 mol-%, 30-55 mol-%, 30-50 mol-%, 30-45 mol-%, 30-40 mol-%, 30-35 mol-%, 35-60 mol-%, 35-55 mol-%, 35-50 mol-%, 35-45 mol-%, 35-40 mol-%, 40-60 mol-%, 40-55 mol-%, 40-50 mol-%, 40-45 mol-%, 45-60 mol-%, 45-55 mol-%, 45-50 mol-%, 50-60 mol-%, 50-55 mol-%, 55-60 mol-%, bezogen auf die Gesamtzusammensetzung der erfindungsgemäßen plasmaresistenten Gläser.

Erfindungsgemäß umfassen die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung (Bismut-Silizium-Boratgläser"), SiO₂ in einer Menge von 5-40 mol-%, 5-35 mol-%, 5-30 mol-%, 5-25 mol-%, 5-20 mol-%, 5-15 mol-%, 5-10 mol-%, 10-40 mol-%, 10-35 mol-%, 10-30 mol-%, 10-25 mol-%, 10-20 mol-%, 10-15 mol-%, 15-40 mol-%, 15-35 mol-%, 15-30 mol-%, 15-25 mol-%, 15-20 mol-%, 20-40 mol-%, 20-35 mol-%, 20-30 mol-%, 20-25 mol-%, 25-40 mol-%, 25-35 mol-%, 25-30 mol-%, 30-40 mol-%, 30-35 mol-%, 35-40 mol-% in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), Seltenerdoxide umfassen, dann können diese Seltenerdoxide in einer Menge von 0,1-30 mol-%, 0,5-30 mol-%, 1-30 mol-%, 2-30 mol-%, 3-30 mol-%, 4-30 mol-%, 5-30 mol-%, 6-30 mol-%, 7-30 mol-%, 8-30 mol-%, 9-30 mol-%, 10-30 mol-%, 11-30 mol-%, 12-30 mol-%, 13-30 mol-%, 14-30 mol-%, 15-30 mol-%, 16-30 mol-%, 17-30 mol-%, 18-30 mol-%, 19-30 mol-%, 20-30 mol-%, 21-30 mol-%, 22-30 mol-%, 23-30 mol-%, 24-30 mol-%, 25-30 mol-%, 26-30 mol-%, 27-30 mol-%, 28-30 mol-%, 29-30 mol-% in der Glaszusammensetzung vorhanden sein. Besonders bevorzugt können die Seltenerdoxide in einer Menge von 13-29 mol-%, 14-28 mol-%, 15-28 mol-%, 16-28 mol-%, 17-27 mol-%, 18-27 mol-%, 19-25 mol-%, 20-25 mol-%, in der Glaszusammensetzung vorhanden sein. Ganz besonders bevorzugt können die Seltenerdoxide in einer Menge von 15-28 mol-%, 17-27 mol-%, 19-25 mol-%, 20-25 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), Al₂O₃ umfassen, dann kann Al₂O₃ in einer Menge von 0,1-10 mol-%, 0,1-5 mol-%, 0,1-3 mol-%, 0,5-10 mol-%,0,5-5 mol-%, 0,5-3 mol-%, 1,5-10 mol-%, 1,5-5 mol-%, 1,5-3 mol-%, 2-10 mol-%, 3-10 mol-%, 4-10 mol-%, 5-10 mol-%, 6-10 mol-%, 7-10 mol-%, 8-10 mol-%, in der Glaszusammensetzung vorhanden sein. Besonders bevorzugt kann Al₂O₃ in einer Menge von 0,1-5 mol-%, 0,5-5 mol-%, 1,5-3 mol-%, 2-5 mol-%, 3-5 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), ZnO umfassen, dann kann ZnO in einer Menge von 0,1-5 mol-%, 0,5-5 mol-%,0,5-3 mol-%,0,5-2 mol-%, 1,5-5 mol-%, 2-5 mol-%, 2,5-5 mol-%, 3-5 mol-%, in der Glaszusammensetzung vorhanden sein. Besonders bevorzugt kann ZnO in einer Menge von 0,1-5 mol-%, 0,1-3 mol-%, 0,1-2 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), SnO₂ umfassen, dann kann SnO₂ in einer Menge von 0,1-15 mol-%, 1-15 mol-%, 1-10 mol-%, 1-7 mol-%, 1-5 mol-%, 2-15 mol-%, 3-15 mol-%, 4-15 mol-%, 5-15 mol-%, 7-15 mol-%, 9-15 mol-%, 10-15 mol-%, 12-15 mol-%, in der Glaszusammensetzung vorhanden sein. Besonders bevorzugt kann SnO₂ in einer Menge von 0,1-10 mol-%, 0,1-5 mol-%, 0,1-3 mol-%, 1-5 mol-%, 2-5 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), TiO₂ umfassen, dann kann TiO₂ in einer Menge von 0,1-25 mol-%, 0,1-20 mol-%, 0,1-15 mol-%, 0,1-10 mol-%, 0,1-5 mol-%, 1-25 mol-%, 1-20 mol-%, 1-15 mol-%, 1-10 mol-%, 1-5 mol-%, 3-25 mol-%, 3-20 mol-%, 3-15 mol-%, 3-10 mol-%, 5-25 mol-%, 5-20 mol-%, 5-15 mol-%, 5-10 mol-%, in der Glaszusammensetzung vorhanden sein. Besonders bevorzugt kann TiO₂ in einer Menge von 0,1-20 mol-%, 0,1-15 mol-%, 1-10 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), ZrO₂ umfassen, dann kann ZrO₂ in einer Menge von 0,1-25 mol-%, 0,1-20 mol-%, 0,1-15 mol-%, 0,1-10 mol-%, 0,1-5 mol-%, 1-25 mol-%, 1-20 mol-%, 1-15 mol-%, 1-10 mol-%, 1-5 mol-%, 3-25 mol-%, 3-20 mol-%, 3-15 mol-%, 3-10 mol-%, 5-25 mol-%, 5-20 mol-%, 5-15 mol-%, 5-10 mol-%, in der Glaszusammensetzung vorhanden. Besonders bevorzugt kann ZrO₂ in einer Menge von 0,1-20 mol-%, 0,1-15 mol-%, 1-10 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), MoO₃ umfassen, dann kann MoO₃ in einer Menge von 0,1-60 mol-%, 0,1-50 mol-%, 0,1-40 mol-%, 0,1-30 mol-%, 0,1-20 mol-%, 0,1-15 mol-%, 0,1-10 mol-%, 5-60 mol-%, 5-50 mol-%, 5-40 mol-%, 5-30 mol-%, 5-20 mol-%, 10-60 mol-%, 10-50 mol-%, 10-40 mol-%, 10-30 mol-%, 20-60 mol-%, 20-50 mol-%, 20-40 mol-%, 20-30 mol-%, 30-60 mol-%, 30-50 mol-%, 30-40 mol-%, 40-60 mol-%, 40-50 mol-%, 50-60 mol-%, in der Glaszusammensetzung vorhanden sein. Besonders bevorzugt kann MoO₃ in einer Menge von 5-60 mol-%, 10-50 mol-%, 10-40 mol-%, 20-50 mol-%, 20-40 mol-%, 30-50 mol-%, 40-50 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), Nb₂O₅,umfassen, dann kann Nb₂O₅,in einer Menge von 0,1-40 mol-%, 0,1-30 mol-%, 0,1-20 mol-%, 0,1-15 mol-%, 0,1-10 mol-%, 0,1-5 mol-%, 1-40 mol-%, 1-30 mol-%, 1-20 mol-%, 1-10 mol-%, 1-5 mol-%, 5-40 mol-%, 5-30 mol-%, 5-20 mol-%, 5-10 mol-%, 10-40 mol-%, 10-30 mol-%, in der Glaszusammensetzung vorhanden. Besonders bevorzugt kann Nb₂O₅ in einer Menge von 1-30 mol-%, 5-30 mol-%,5-20 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), Ta₂O₅,umfassen, dann kann Ta₂O₅,in einer Menge von 0,1-30 mol-%, 0,1-25 mol-%, 0,1-20 mol-%, 0,1-15 mol-%, 0,1-10 mol-%, 0,1-5 mol-%, 1-30 mol-%, 1-25 mol-%, 1-20 mol-%, 1-10 mol-%, 1-5 mol-%, 5-30 mol-%, 5-25 mol-%, 5-20 mol-%, 5-10 mol-%, 10-30 mol-%, 10-20 mol-%, in der Glaszusammensetzung vorhanden sein. Besonders bevorzugt kann Ta₂O₅ in einer Menge von 1-30 mol-%, 1-20 mol-%, 5-30 mol-%,5-20 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), eins oder mehrere Oxide aus der Gruppe bestehend aus: MgO, CaO, SrO oder BaO umfassen, dann können diese Oxide in einer Menge von 0,1-10 mol-%, 0,1-5 mol-%, 0,1-3 mol-%, 0,5-10 mol-%,0,5-5 mol-%, 0,5-3 mol-%, 1,5-10 mol-%, 1,5-5 mol-%, 1,5-3 mol-%, 2-10 mol-%, 3-10 mol-%, 4-10 mol-%, 5-10 mol-%, 6-10 mol-%, 7-10 mol-%, 8-10 mol-%, in der Glaszusammensetzung vorhanden sein. Besonders bevorzugt können eins oder mehrere Oxide aus der Gruppe bestehend aus: MgO, CaO, SrO oder BaO in einer Menge von 0,1-5 mol-%, 0,5-5 mol-%, 1,5-3 mol-%, 2-5 mol-%, 3-5 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), HfO₂ umfassen, dann kann HfO₂ in einer Menge von 0,1-10 mol-%, 0,1-5 mol-%, 0,1-3 mol-%, 0,5-10 mol-%,0,5-5 mol-%, 0,5-3 mol-%, 1,5-10 mol-%, 1,5-5 mol-%, 1,5-3 mol-%, 2-10 mol-%, 3-10 mol-%, 4-10 mol-%, 5-10 mol-%, 6-10 mol-%, 7-10 mol-%, 8-10 mol-%, in der Glaszusammensetzung vorhanden sein. Besonders bevorzugt kann HfO₂ in einer Menge von 0,1-5 mol-%, 0,5-5 mol-%, 1,5-3 mol-%, 2-5 mol-%, 3-5 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), GeO₂ umfassen, dann kann GeO₂ in einer Menge von 0,1-10 mol-%, 0,1-5 mol-%, 0,1-3 mol-%, 0,5-10 mol-%,0,5-5 mol-%, 0,5-3 mol-%, 1,5-10 mol-%, 1,5-5 mol-%, 1,5-3 mol-%, 2-10 mol-%, 3-10 mol-%, 4-10 mol-%, 5-10 mol-%, 6-10 mol-%, 7-10 mol-%, 8-10 mol-%, in der Glaszusammensetzung vorhanden sein. Besonders bevorzugt kann GeO₂ in einer Menge von 0,1-5 mol-%, 0,5-5 mol-%, 1,5-3 mol-%, 2-5 mol-%, 3-5 mol-%, in der Glaszusammensetzung vorhanden sein.

Wenn erfindungsgemäß die plasmaresistenten Gläser, insbesondere der ersten Ausgestaltung ("Boratgläser") oder der zweiten Ausgestaltung ("Wolfram-Boratgläser") oder der dritten Ausgestaltung ("Bismut-Boratgläser") oder der vierten Ausgestaltung ("Silizium-Boratgläser") oder der fünften Ausgestaltung ("Bismut-Silizium-Boratgläser"), V₂O₅ umfassen, dann kann V₂O₅ in einer Menge von 0,1-20 mol-%, 0,1-18 mol-%, 0,1-15 mol-%, 0,1-10 mol-%, 0,1-5 mol-%, 1-20 mol-%, 1-18 mol-%, 1-15 mol-%, 1-10 mol-%, 1-5 mol-%, 3-20 mol-%, 3-18 mol-%, 3-15 mol-%, 3-10 mol-%, 5-20 mol-%, 5-18 mol-%, 5-15 mol-%, 5-10 mol-%, in der Glaszusammensetzung vorhanden sein. Besonders bevorzugt kann V₂O₅ in einer Menge von 0,1-20 mol-%, 0,1-15 mol-%, 1-10 mol-%, in der Glaszusammensetzung vorhanden sein.

### Ausführungsbeispiele

Nachfolgend wird die Erfindung anhand von Ausführungsbeispielen näher erläutert.

Zur Herstellung von Probenkörpern aus dem Multikomponentenglas wurden hochreine oxidische Ausgangpulver bei Temperaturen im Bereich von 1450 bis 1600°C in einem Platin-Tiegel aufgeschmolzen. Die Schmelze wurde zum Läutern 1h bis 3h bei Schmelztemperatur gehalten und anschließend in eine Gießform abgegossen. Die nach dem Erstarren der Schmelze erhaltenen Probenkörper wurden spannungsfrei getempert. Die Trockenätzbeständigkeit wurde in einem RIE-Plasmareaktor gemessen, und die Partikelbildung wurde anhand der unter "Definitionen" angegebenen Methode abgeschätzt.

In Tabelle 1 sind die Zusammensetzungen und Eigenschaften der Proben angegeben.

**Tabelle 1**

| **Prob e** | **Zusammensetzu ng** | | **Ätzrat e** | **Viskosität** | | **Dichte** | **Partikelbildung** | | |
|---|---|---|---|---|---|---|---|---|---|
| | **Komp o-nente n** | **Anteile [mol-%]** | **Relati v [%]** | **T@10^{13.2} P [°C]** | **T@10² P [°C]** | **ρ [g/cm³]** | **Fluorid e** | **Chlorid e** | **Bromide** |
| 1 | Y₂O₃-WO₃-B₂O₃ | 23-30-47 | 8% | 660 | 1084 | 4,2 | + | - | - |
| 2 | Y₂O₃-WO₃-B₂O₃ | 23-40-37 | 7% | 663 | 1115 | 4,6 | + | - | - |
| 3 | La₂O₃-WO₃-B₂O₃ | 23-10-67 | 20% | 646 | 963 | 4,2 | + | 0 | 0 |
| 4 | La₂O₃-WO₃-B₂O₃ | 23-30-47 | 11% | 624 | 960 | 5,0 | + | - | - |
| 5 | La₂O₃-WO₃-B₂O₃ | 23-40-37 | 11% | 613 | 996 | 5,3 | + | - | - |
| 6 | La₂O₃-WO₃-B₂O₃ | 23-20-57 | 11% | 637 | 938 | 4,6 | + | 0 | 0 |
| 7 | Bi₂O₃-B₂O₃-V₂O₅ | 30-50-20 | 72% | 402 | 736 | 5,0 | + | + | 0 |
| 8 | B₂O₃-V₂O₅-Bi₂O₃ | 50-10-40 | 84% | 419 | 697 | 5,8 | 0 | + | 0 |
| 9 | B₂O₃-V₂O₅-Bi₂O₃ | 40-10-50 | 80% | 410 | 659 | 6,5 | 0 | 0 | 0 |
| 10 | Bi₂O₃-B₂O₃-SiO₂-WO₃ | 47,5-38-9,5-5 | 52% | 416 | 601 | 6,9 | 0 | 0 | 0 |
| 11 | Bi₂O₃-B₂O₃-SiO₂ | 50-20-30 | 58% | 388 | 677 | 7,0 | 0 | 0 | 0 |
| 12 | Bi₂O₃-B₂O₃-SiO₂ | 50-40-10 | 66% | 403 | 618 | 7,0 | 0 | 0 | 0 |
| 13 | Bi₂O₃-B₂O₃-SiO₂ | 40-40-20 | 64% | 417 | 661 | 6,4 | 0 | + | + |
| 14 | Bi₂O₃-B₂O₃-MoO₃-WO₃ | 28,5-57-9,5-5 | 58% | 456 | 671 | 5,2 | + | + | + |
| 15 | Bi₂O₃-B₂O₃-MoO₃-SiO₂ | 28,5-57-9,5-5 | 61% | 455 | 694 | 5,1 | + | + | + |
| 16 | Bi₂O₃-B₂O₃-MoO₃ | 30-50-20 | 68% | 440 | 701 | 5,1 | + | + | 0 |
| 17 | Bi₂O₃-B₂O₃-MoO₃ | 35,5-40,7-23,8 | 60% | 426 | 678 | 5,3 | 0 | + | 0 |
| 18 | Bi₂O₃-B₂O₃-MoO₃ | 30-60-10 | 82% | 448 | 698 | 5,0 | + | + | + |
| 19 | B₂O₃-Bi₂O₃-WO₃ | 60-30-10 | 88% | 392 | 579 | 7,2 | + | + | 0 |
| 20 | B₂O₃-Bi₂O₃-WO₃ | 40-20-40 | 61% | 451 | 584 | 7,3 | + | 0 | - |
| 21 | Bi₂O₃-B₂O₃-SiO₂-MgO | 36-36-18-10 | 33% | 431 | 699 | 5,9 | - | 0 | 0 |
| V22 | Bi₂O₃-B₂O₃-SiO₂-MgO | 32-32-16-20 | 15% | 449 | 678 | 4,8 | - | - | - |
| 23 | Bi₂O₃-B₂O₃-SiO₂-CaO | 36-36-18-10 | 36% | 416 | 652 | 6,1 | - | 0 | 0 |
| V24 | Bi₂O₃-B₂O₃-SiO₂-CaO | 32-32-16-20 | 17% | 428 | 625 | 5,7 | - | - | - |
| 25 | Bi₂O₃-B₂O₃-SiO₂-SrO | 36-36-18-10 | 37% | 414 | 634 | 6,3 | - | 0 | 0 |
| V26 | Bi₂O₃-B₂O₃-SiO₂-SrO | 32-32-16-20 | 19% | 425 | 597 | 5,9 | - | - | - |
| 27 | Bi₂O₃-B₂O₃-SiO₂-MgO | 36-36-18-10 | 33% | 431 | 699 | 5,9 | - | 0 | 0 |
| V28 | Bi₂S₃-B₂O₃-SiO₂-MgO | 32-32-16-20 | 15% | 449 | 678 | 4,8 | - | - | - |
| V29 | SiO₂-Al₂O₃-Y₂O₃-MgO | 57-15-10-18 | 7% | 805 | 1444 | 3,1 | - | 0 | 0 |

Die Spalte "relative Ätzrate" gibt die Ätzrate der Messprobe bezogen auf die Ätzrate von undotiertem, synthetisch erzeugtem Quarzglas (SUPRASIL^{®}, Handelsbezeichnung der Heraeus Quarzglas GmbH & Co. KG) als Referenz an.

Die Symbolik der qualitativen Bewertung in der Spalte "Partikelbildung" bedeutet dabei: (+): wenig, (0): akzeptabel, (-): viel. Die Spalte "Fluoride" qualifiziert die Partikelbildung bei Einsatz von Ätzgasen im RIE-Prozess, die ausschließlich Fluor oder Fluorverbindungen enthalten. Entsprechend qualifizieren die Spalten "Chloride" beziehungsweise "Bromide" die Partikelbildung bei Einsatz von Ätzgasen im RIE-Prozess, die ausschließlich Chlor oder Chlorverbindungen beziehungsweise ausschließlich Brom oder Bromverbindungen enthalten.

Das Vergleichsbeispiele V22, V24, V26, V28 und V29 zeigen die negativen Auswirkungen der Gegenwart von Erdalkalimetalloxiden in Multikomponentengläser auf die Partikelbildung, insbesondere in einem fluoridhaltigen Ätzgas. Dabei ist zu berücksichtigen, dass eine niedrigen Partikelbildung in einem fluoridhaltigen Ätzgas besonders wichtig ist, da fluoridhaltiges Ätzgas einerseits das aggressivste Ätzgas und das am häufigsten verwendete Ätzgas im Vergleich zu chloridhaltigen und bromidhaltigen Ätzgasen ist.

## Patentansprüche

1. Borhaltige-Multikomponentenglas mit geringer Partikelbildung beim Trockenätzen, das mindestens eine Komponente enthält, die mit halogenhaltigem Ätzgas ein volatiles Reaktionsprodukt bildet, und Alkali- und Erdalkalioxide nicht oder in einer Konzentration von jeweils maximal 15 mol-%, bevorzugt maximal 10 mol-%, weiter bevorzugt maximal 5 mol-%, enthält.

2. Multikomponentenglas nach Anspruch 1, **dadurch gekennzeichnet, dass** die Menge an Glasbildnern in dem Multikomponentenglas, ausgewählt aus der Gruppe, bestehend aus B₂O₃, SiO₂, WO₃, Bi₂O₃ und Mischungen davon, 70 bis 100 mol-% beträgt.

3. Multikomponentenglas nach einem der Ansprüche 1 oder 2, **dadurch gekennzeichnet, dass** in dem Multikomponentenglas das Molverhältnis B₂O₃ zu SiO₂ größer gleich 1 : 2, bevorzugt größer gleich 1 : 1,75, weiter bevorzugt größer gleich 1 : 1,5, weiter bevorzugt größer gleich 1 : 1,25, weiter bevorzugt größer gleich 1 : 1, ist.

4. Multikomponentenglas nach einem der Ansprüche 1 bis 3, **dadurch gekennzeichnet, dass** das volatile Reaktionsprodukt eine Verflüchtigungstemperatur unterhalb von 500°C, bevorzugt eine Verflüchtigungstemperatur unterhalb von 300°C aufweist.

5. Multikomponentenglas nach einem der Ansprüche 1 bis 4, **dadurch gekennzeichnet, dass** das volatile Reaktionsprodukt ein Fluorid ist und eine Verflüchtigungstemperatur oberhalb von 0°C aufweist.

6. Multikomponentenglas nach Anspruch 5, **dadurch gekennzeichnet, dass** die mindestens eine weitere Komponente ein Oxid ist, ausgewählt aus der Gruppe bestehend aus: V₂O₅, MoO₃, WO₃ und GeO₂.

7. Multikomponentenglas nach einem der Ansprüche 1 bis 6, **dadurch gekennzeichnet, dass** das volatile Reaktionsprodukt ein Chlorid oder ein Bromid ist und eine Verflüchtigungstemperatur oberhalb von 70°C aufweist.

8. Multikomponentenglas nach Anspruch 7, **dadurch gekennzeichnet, dass** die mindestens eine weitere Komponente ein Oxid ist, ausgewählt aus der Gruppe, bestehend aus Al₂O₃, Ga₂O, SnO₂, TiO₂, ZrO₂, HfO₂, und Bi₂O₃.

9. Multikomponentenglas nach einem der Ansprüche 1 bis 8, **dadurch gekennzeichnet, dass** die mindestens eine weitere Komponente
(a) zu mehr als 70%, bevorzugt zu mehr als 80% und besonders bevorzugt zu mehr als 90% eine dreiwertige oder vierwertige Verbindung eines kationisch vorliegenden chemischen Elements ist, und
(b) zu weniger als 30%, bevorzugt zu weniger als 20% und besonders bevorzugt im Bereich bis 10% eine einwertige oder zweiwertige Verbindung eines kationisch vorliegenden chemischen Elements ist.

10. Multikomponentenglas nach einem der Ansprüche 1 bis 9, **dadurch gekennzeichnet, dass** die mindestens eine weitere Komponente ein chemisches Element ist aus der Gruppe bestehend aus, Al₂O₃, ZnO, SnO₂, TiO₂, ZrO₂, HfO₂, MoO₃, WO₃, V₂O₅, Nb₂O₅, Ta₂O₅, MgO, CaO, SrO, BaO, Y₂O₃ und den Oxiden der Lanthanoiden.

11. Multikomponentenglas nach einem der Ansprüche 1 bis 10, **dadurch gekennzeichnet, dass** es Aluminiumverbindungen nicht oder als Komponente in einer Konzentration von weniger als 1000 mol-ppm enthält.

12. Multikomponentenglas nach einem der Ansprüche 1 bis 11, **dadurch gekennzeichnet, dass** es Bor- und Phosphorverbindungen nicht oder als Verunreinigung in einer Konzentration von jeweils weniger als 1000 Gew.-ppm enthält.

13. Multikomponentenglas nach einem der Ansprüche 1 bis 12, **dadurch gekennzeichnet, dass** es Arsenverbindungen nicht oder als Verunreinigung in einer Konzentration von maximal 1000 Gew.-ppm enthält.

14. Multikomponentenglas nach einem der Ansprüche 1 bis 13, **dadurch gekennzeichnet, dass** es Antimon und Antimonverbindungen nicht oder als Verunreinigung in einer Konzentration von maximal 1000 Gew.-ppm enthält.

15. Glasbauteil zum Einsatz in einem Trockenätzprozess in Kontakt mit einem Plasma und halogenhaltigem Ätzgas, **dadurch gekennzeichnet, dass** es eine dem Ätzgas ausgesetzte Oberfläche aufweist, die aus einem Multikomponentenglas nach einem der Ansprüche 1 bis 14 besteht.
